# EUROPEAN PATENT APPLICATION

(11) **EP 4 465 105 A1**
(43) Date of publication of application: **20.11.2024**
(21) Application number: 23769826.1
(22) Date of filing: 15.03.2023
(51) Int. Cl.: G02B 7/04, G02B 13/02, G02B 13/24, G03B 30/00

(54) **LENS ASSEMBLY, CAMERA MODULE AND ELECTRONIC DEVICE**

(30) Priority: 17.03.2022 CN 202210265979
(71) Applicant: Huawei Technologies Co., Ltd., Shenzhen, Guangdong 518129 (CN)
(72) Inventor: SUN, Zhanli, Shenzhen, Guangdong 518129 (CN); LIU, Hongming, Shenzhen, Guangdong 518129 (CN); LI, Dengfeng, Shenzhen, Guangdong 518129 (CN); BIAN, Xinxiu, Shenzhen, Guangdong 518129 (CN); DAI, Renjun, Shenzhen, Guangdong 518129 (CN); FAN, Xiankai, Shenzhen, Guangdong 518129 (CN); CAI, Bin, Shenzhen, Guangdong 518129 (CN)
(74) Representative: MERH-IP Matias Erny Reichl Hoffmann Patentanwälte PartG mbB
(86) International application number: PCT/CN2023/081588
(87) International publication number: WO 2023/174324

(57) **Abstract**

This application provides a lens assembly, a camera module, and an electronic device. The lens assembly includes a housing, a fastening base, a first lens, a second lens, and a driving mechanism. The fastening base is slidably connected to the housing and is located inside the housing. The first lens is fastened to the fastening base, the second lens is fastened to the housing, and the second lens is located on an image side of the first lens. The driving mechanism is configured to enable the housing to slide relative to the fastening base, and a distance between the second lens and the first lens in an optical axis direction of the lens assembly increases or decreases. On the one hand, a quasi-focus position of the lens assembly is changed by increasing or decreasing the distance between the first lens and the second lens, which is conducive to macro and telescopic photographing of the lens assembly, and greatly improves user experience. On the other hand, the housing is slidably connected to the fastening base, and a movement distance of the housing relative to the fastening base may be longer, which is more conducive to macro and telescopic photographing.

## Description

This application claims priority to Chinese Patent Application No. 202210265979.X, filed with the China National Intellectual Property Administration on March 17, 2022 and entitled "LENS ASSEMBLY, CAMERA MODULE, AND ELECTRONIC DEVICE", which is incorporated herein by reference in its entirety.

### TECHNICAL FIELD

This application relates to the field of camera technologies, and in particular, to a lens assembly, a camera module, and an electronic device.

### BACKGROUND

As key technologies such as a bezel-less screen and fingerprint recognition rapidly develop, multi-function settings of an electronic device, especially a mobile phone product, have become a trend. This design compresses arrangement space of the camera module to a large extent. In such an environment in which space arrangement is limited, a conventional mobile phone usually uses a vertical camera module, to reduce space occupied by the camera module in a length direction and a width direction of the mobile phone. However, the conventional vertical camera module usually uses a drive motor with a spring plate. A stroke of the camera module in a focus adjustment process may be provided based on an amount of deformation of the spring plate. Due to a structural constraint of the spring plate, the amount of deformation of the spring plate is small. Therefore, it is difficult for the drive motor to implement long-stroke focus adjustment, and photographing performance of the camera module is poor.

### SUMMARY

This application provides a lens assembly, a camera module, and an electronic device for long-stroke focus adjustment.

According to a first aspect, an embodiment of this application provides a lens assembly. The lens assembly includes a housing, a fastening base, a first lens, a second lens, and a driving mechanism. The fastening base is slidably connected to the housing and is located inside the housing.

The first lens is fastened to the fastening base, the second lens is fastened to the housing, and the second lens is located on an image side of the first lens.

The driving mechanism is configured to enable the housing to slide relative to the fastening base, and a distance between the second lens and the first lens in an optical axis direction of the lens assembly increases or decreases. The following uses an example in which the optical axis direction of the lens assembly is a Z axis for description.

In this implementation, the housing is driven to slide relative to the fastening base, so that the distance between the second lens and the first lens in the optical axis direction of the lens assembly increases or decreases, to implement focusing of the lens assembly. It may be understood that, on the one hand, the quasi-focus position of the lens assembly is changed by increasing or decreasing the distance between the first lens and the second lens, which is conducive to macro and telescopic photographing of the lens assembly, and greatly improves user experience. On the other hand, compared with a solution in which focusing is implemented through deformation of a spring plate, a solution in this implementation is that the housing is slidably connected to the fastening base. This can avoid a problem that a focus adjustment stroke is limited due to a structural constraint of the spring plate. A sliding distance of the housing in this implementation relative to the fastening base may be longer. This is more conducive to implementing macro and telescopic photographing. For example, a maximum distance for which the housing can slide in a Z-axis direction relative to the fastening base may be 5 millimeters.

In a possible implementation, the driving mechanism is configured to drive the housing to slide in the optical axis direction of the lens assembly.

It may be understood that, the housing is driven to slide in the optical axis direction of the lens assembly, so that the housing can drive the second lens to move away from or close to the first lens in the optical axis direction of the lens assembly. Because the second lens is located on the image side of the first lens, the second lens does not easily collide with or interfere with a component on the top of the first lens.

In a possible implementation, the driving mechanism includes a magnet and a coil. One of the magnet and the coil is fastened to the housing, and the other is fastened to the fastening base. The magnet and the coil are disposed opposite to each other. In other words, when the magnet is fastened to the housing, the coil is fastened to the fastening base. When the coil is fastened to the housing, the magnet is fastened to the fastening base.

It may be understood that, the driving mechanism of the magnet and the coil is used, so that the driving mechanism can be prevented from being directly connected to the housing and the fastening base. This avoids impact of a bending stress on motion precision of the lens assembly on a part that is of the driving mechanism and that is connected to the housing and the fastening base.

It may be understood that when the driving mechanism is configured to drive the housing to slide in the optical axis direction of the lens assembly, the magnet is fastened to the housing, and the coil is fastened to the fastening base, the magnet is a mover, and the coil is a stator. In this way, the coil does not interfere with another component in motion, and a bending stress of the coil does not affect motion precision of the lens assembly.

It may be understood that when the driving mechanism is configured to drive the housing to slide in the optical axis direction of the lens assembly, the coil is fastened to the housing, and the magnet is fastened to the fastening base, the coil is a mover, and the magnet is a stator. In this way, because gravity of the coil is small, a driving force of the driving mechanism is small.

In a possible implementation, the lens assembly includes a guide rod, one of the housing and the fastening base is fastened to the guide rod, and the other is slidably connected to the guide rod.

It may be understood that, the guide rod is disposed, one of the housing and the fastening base is fastened to the guide rod, and the other is slidably connected to the guide rod. In this way, in a process in which the housing slides relative to the fastening base, the guide rod may play a guiding role, so that the housing slides more accurately in the Z-axis direction, that is, the housing is not easily deviated.

In a possible implementation, the housing is provided with a first groove and a second groove that are spaced apart, and the fastening base is provided with a third groove and a fourth groove that are spaced apart. The guide rod includes a first guide rod and a second guide rod. The first guide rod is slidably connected to a groove wall of the first groove, the first guide rod is fastened to a groove wall of the third groove, the second guide rod is slidably connected to a groove wall of the second groove, and the second guide rod is fastened to a groove wall of the fourth groove.

It may be understood that, matching disposing of the first guide rod and a first sliding slot (namely, the first groove and the third groove) and matching disposing of the second guide rod and a second sliding slot (namely, the second groove and the fourth groove) may play a guiding function in a process in which the housing slides relative to the fastening base, so that the housing slides more accurately in the Z-axis direction, that is, the housing is not easily deviated.

In addition, the first sliding slot is divided into the first groove and the third groove, to reduce difficulty in assembling the first guide rod and the first sliding slot. For example, the first guide rod may be first disposed in the third groove, then the first guide rod is bonded to the groove wall of the third groove by using adhesive, and finally the first groove is assembled with the first guide rod.

In a possible implementation, the groove wall of the first groove is of a "V" shape, and the groove wall of the second groove is of an arc shape, a "[" shape, or a U shape; or the groove wall of the first groove is of an arc shape, a "[" shape, or a U shape, and the second groove is of a "V" shape.

It may be understood that, in a possible implementation, the groove wall of the first groove is disposed to be in the "V" shape, so that the two groove walls of the first groove can maintain contact with the first guide rod, and the two groove walls of the first groove are relatively easy to clamp the first guide rod. The housing, the first guide rod, and the fastening base are connected more stably. In addition, the second groove of the housing is disposed to be in the "[" shape, a circle, or the U shape, so that a specific error may be reserved between the groove wall of the second groove and the second guide rod, and the second guide rod and the second groove are not difficult to be assembled due to a position error.

In a possible implementation, the lens assembly includes a first magnetic attachment member and a second magnetic attachment member, the first magnetic attachment member is fastened to the housing, and the second magnetic attachment member is fastened to the fastening base. The guide rod maintains contact with the housing and the fastening base under force of attachment of the first magnetic attachment member and the second magnetic attachment member.

It may be understood that the first magnetic attachment member is fastened to the housing, and the second magnetic attachment member is fastened to the fastening base, so that the housing, the first guide rod, the second guide rod, and the fastening base are in close contact by using magnetic attraction generated by the first magnetic attachment member and the second magnetic attachment member in a Y-axis direction. In this way, the fastening base is not easy to shake relative to the housing.

In a possible implementation, a first fastening groove is disposed on the housing, and a second fastening groove is disposed on the fastening base. The first magnetic attachment member is located in the first fastening groove, and the second magnetic attachment member is located in the second fastening groove.

It may be understood that, the first magnetic attachment member is disposed in the first fastening groove, so that a connection area between the first magnetic attachment member and the housing can be increased, to improve connection firmness between the first magnetic attachment member and the housing, and this is conducive to a miniaturization and lightweight design of the lens assembly.

In addition, the second magnetic attachment member is disposed in the second fastening groove, so that a connection area between the second magnetic attachment member and the housing can be increased, to improve connection firmness between the second magnetic attachment member and the housing, and a miniaturization and lightness design of the lens assembly can be further implemented.

In a possible implementation, the guide rod includes the first guide rod and the second guide rod that are spaced apart, and the first guide rod and the second guide rod are located on a same side of the fastening base. The second magnetic attachment member is located between the first guide rod and the second guide rod, or is located on a side that is of the first guide rod and that is away from the second guide rod, or is located on a side that is of the second guide rod and that is away from the first guide rod.

It may be understood that the second magnetic attachment member, the first guide rod, and the second guide rod are arranged more closely. In this way, a force between the housing and the fastening base is greater, and connections among the housing, the first guide rod, the second guide rod, and the fastening base are more stable.

In a possible implementation, the lens assembly includes a tunnel magnetoresistance sensor and a magnetic gate. One of the tunnel magnetoresistance sensor and the magnetic gate is fastened to the housing, and the other is fastened to the fastening base. The tunnel magnetoresistance sensor is configured to detect magnetic field strength of the magnetic gate at different positions.

It may be understood that, when the housing moves in the Z-axis direction relative to the fastening base, the housing may drive the magnetic gate to move in the Z-axis direction relative to the fastening base. The tunnel magnetoresistance sensor may detect magnetic field strength of the magnetic gate at a position. In this way, when the tunnel magnetoresistance sensor detects the magnetic field strength of the magnetic gate, displacement of the housing may be determined based on the magnetic field strength. It may be understood that the tunnel magnetoresistance sensor cooperates with the magnetic gate, to accurately control displacement of the housing moving relative to the fastening base in the Z-axis direction. This implements a closed-loop design of the lens assembly.

In addition, compared with a solution in which a Hall effect sensor and a magnet are used, a solution in which the tunnel magnetoresistance sensor cooperates with the magnetic gate is used in this implementation, the housing with large displacement can be accurately measured.

In a possible implementation, the lens assembly includes a first buffer member, and the first buffer member is fastened to a bottom surface of the fastening base. In this way, when the housing drives the second lens to move in a positive direction of a Z axis, the first buffer member may buffer a collision force between a bottom plate of the housing and the fastening base, to avoid collision of the bottom plate of the housing or the fastening base.

In a possible implementation, the first lens includes a lens cover, a first lens tube, and a first lens element. There are a plurality of first lens elements. At least one first lens element is fastened between the lens cover and the first lens tube. The remaining first lens elements are fastened to the first lens tube.

In a possible implementation, the second lens includes a second lens tube and a second lens element. The second lens element is fastened to the second lens tube.

In a possible implementation, the driving mechanism is configured to drive the fastening base to slide in the optical axis direction of the lens assembly.

According to a second aspect, an embodiment of this application provides a camera module. The camera module includes a module circuit board, a photosensitive chip, and the foregoing lens assembly. The photosensitive chip is fastened to the module circuit board, and is electrically connected to the module circuit board. The housing of the lens assembly is connected to the module circuit board, and the second lens is located on an object side of the photosensitive chip.

It may be understood that, on the one hand, the quasi-focus position of the lens assembly is changed by increasing or decreasing the distance between the first lens and the second lens, which is conducive to macro and telescopic photographing of the camera module, and greatly improves user experience. On the other hand, compared with a solution in which focusing is implemented through deformation of a spring plate, a solution in this implementation is that the housing is slidably connected to the fastening base. This can avoid a problem that a focus adjustment stroke is limited due to a structural constraint of the spring plate. A sliding distance of the housing in this implementation relative to the fastening base may be longer. This is more conducive to implementing macro and telescopic photographing of the camera module. For example, a maximum distance for which the housing can slide in a Z-axis direction relative to the fastening base may be 5 millimeters.

In a possible implementation, the camera module includes a base, the base is fastened to the module circuit board, and the housing of the lens assembly is slidably connected to the base. The lens assembly includes a second buffer member, and the second buffer member is fastened to a bottom of the housing.

In this way, when the housing of the lens assembly slides relative to the base, the second buffer member may buffer a collision force between a bottom plate of the housing and the base, to avoid collision of the bottom plate of the housing or the base.

According to a third aspect, an embodiment of this application provides an electronic device. The electronic device includes a casing and a camera module. The module circuit board includes a module circuit board, a photosensitive chip, and a lens assembly. The module circuit board is connected to the casing, and the photosensitive chip is fastened to the module circuit board and is electrically connected to the module circuit board.

The lens assembly includes a housing, a fastening base, a first lens, a second lens, and a driving mechanism, and the housing is connected to the module circuit board. The fastening base is slidably connected to the housing and is located inside the housing. The first lens is fastened to the fastening base, the second lens is fastened to the housing, and the second lens is located on an image side of the first lens and located on an object side of the photosensitive chip.

The driving mechanism is configured to enable the housing to slide relative to the fastening base, and a distance between the second lens and the first lens in an optical axis direction of the lens assembly increases or decreases.

It may be understood that, on the one hand, the quasi-focus position of the lens assembly is changed by increasing or decreasing the distance between the first lens and the second lens, which is conducive to macro and telescopic photographing of the electronic device, and greatly improves user experience. On the other hand, compared with a solution in which focusing is implemented through deformation of a spring plate, a solution in this implementation is that the housing is slidably connected to the fastening base. This can avoid a problem that a focus adjustment stroke is limited due to a structural constraint of the spring plate. A sliding distance of the housing in this implementation relative to the fastening base may be longer. This is more conducive to implementing macro and telescopic photographing of the electronic device. For example, a maximum distance for which the housing can slide in a Z-axis direction relative to the fastening base may be 5 millimeters.

In a possible implementation, the casing includes a rear cover. The electronic device includes a camera decorative member and a driving apparatus. The camera decorative member is slidably connected to the rear cover. The first lens is fastened to the camera decorative member. The driving apparatus is configured to drive the camera decorative member to drive the lens assembly to move in an optical axis direction of the camera module.

It may be understood that, the driving apparatus drives the camera decorative member to drive the lens assembly to move in the optical axis direction of the camera module, so that a size of bottom space of the lens assembly is increased to a large extent. In this way, when the driving mechanism is configured to drive the housing to slide in the optical axis direction of the lens assembly, the bottom space of the lens assembly can accommodate movement of the lens assembly to a large extent.

In a possible implementation, the casing includes a rear cover; the electronic device includes a camera decorative member, and the camera decorative member is fastened to the rear cover; and the first lens is fastened to the camera decorative member.

In a possible implementation, the driving mechanism is configured to drive the housing to slide in the optical axis direction of the lens assembly.

It may be understood that, the housing is driven to slide in the optical axis direction of the lens assembly, so that the housing can drive the second lens to move away from or close to the first lens in the optical axis direction of the lens assembly. Because the second lens is located on the image side of the first lens, the second lens does not easily collide with or interfere with the rear cover.

In a possible implementation, the driving mechanism includes a magnet and a coil. One of the magnet and the coil is fastened to the housing, and the other is fastened to the fastening base. The magnet and the coil are disposed opposite to each other.

It may be understood that, the driving mechanism of the magnet and the coil is used, so that the driving mechanism can be prevented from being directly connected to the housing and the fastening base. This avoids impact of a bending stress on motion precision of the lens assembly on a part that is of the driving mechanism and that is connected to the housing and the fastening base.

It may be understood that when the driving mechanism is configured to drive the housing to slide in the optical axis direction of the lens assembly, the magnet is fastened to the housing, and the coil is fastened to the fastening base, the magnet is a mover, and the coil is a stator. In this way, the coil does not interfere with another component in motion, and a bending stress of the coil does not affect motion precision of the lens assembly.

It may be understood that when the driving mechanism is configured to drive the housing to slide in the optical axis direction of the lens assembly, the coil is fastened to the housing, and the magnet is fastened to the fastening base, the coil is a mover, and the magnet is a stator. In this way, because gravity of the coil is small, a driving force of the driving mechanism is small.

In a possible implementation, the lens assembly includes a guide rod, one of the housing and the fastening base is fastened to the guide rod, and the other is slidably connected to the guide rod.

It may be understood that, the guide rod is disposed, one of the housing and the fastening base is fastened to the guide rod, and the other is slidably connected to the guide rod. In this way, in a process in which the housing slides relative to the fastening base, the guide rod may play a guiding role, so that the housing slides more accurately in the Z-axis direction, that is, the housing is not easily deviated.

In a possible implementation, the housing is provided with a first groove and a second groove that are spaced apart, and the fastening base is provided with a third groove and a fourth groove that are spaced apart. The guide rod includes a first guide rod and a second guide rod. The first guide rod is slidably connected to a groove wall of the first groove, the first guide rod is fastened to a groove wall of the third groove, the second guide rod is slidably connected to a groove wall of the second groove, and the second guide rod is fastened to a groove wall of the fourth groove.

It may be understood that, matching disposing of the first guide rod and a first sliding slot (namely, the first groove and the third groove) and matching disposing of the second guide rod and a second sliding slot (namely, the second groove and the fourth groove) may play a guiding function in a process in which the housing slides relative to the fastening base, so that the housing slides more accurately in the Z-axis direction, that is, the housing is not easily deviated.

In addition, the first sliding slot is divided into the first groove and the third groove, to reduce difficulty in assembling the first guide rod and the first sliding slot. For example, the first guide rod may be first disposed in the third groove, then the first guide rod is bonded to the groove wall of the third groove by using adhesive, and finally the first groove is assembled with the first guide rod.

In a possible implementation, the groove wall of the first groove is of a "V" shape, and the groove wall of the second groove is of an arc shape, a "[" shape, or a U shape; or the groove wall of the first groove is of an arc shape, a "[" shape, or a U shape, and the second groove is of a "V" shape.

It may be understood that, in a possible implementation, the groove wall of the first groove is disposed to be in the "V" shape, so that the two groove walls of the first groove can maintain contact with the first guide rod, and the two groove walls of the first groove are relatively easy to clamp the first guide rod. The housing, the first guide rod, and the fastening base are connected more stably. In addition, the second groove of the housing is disposed to be in the "[" shape, a circle, or the U shape, so that a specific error may be reserved between the groove wall of the second groove and the second guide rod, and the second guide rod and the second groove are not difficult to be assembled due to a position error.

In a possible implementation, the lens assembly includes a first magnetic attachment member and a second magnetic attachment member, the first magnetic attachment member is fastened to the housing, and the second magnetic attachment member is fastened to the fastening base. The guide rod maintains contact with the housing and the fastening base under force of attachment of the first magnetic attachment member and the second magnetic attachment member.

It may be understood that the first magnetic attachment member is fastened to the housing, and the second magnetic attachment member is fastened to the fastening base, so that the housing, the first guide rod, the second guide rod, and the fastening base are in close contact by using magnetic attraction generated by the first magnetic attachment member and the second magnetic attachment member in a Y-axis direction. In this way, the fastening base is not easy to shake relative to the housing.

In a possible implementation, a first fastening groove is disposed on the housing, and a second fastening groove is disposed on the fastening base. The first magnetic attachment member is located in the first fastening groove, and the second magnetic attachment member is located in the second fastening groove.

It may be understood that, the first magnetic attachment member is disposed in the first fastening groove, so that a connection area between the first magnetic attachment member and the housing can be increased, to improve connection firmness between the first magnetic attachment member and the housing, and this is conducive to a miniaturization and lightweight design of the lens assembly.

In addition, the second magnetic attachment member is disposed in the second fastening groove, so that a connection area between the second magnetic attachment member and the housing can be increased, to improve connection firmness between the second magnetic attachment member and the housing, and a miniaturization and lightness design of the lens assembly can be further implemented.

In a possible implementation, the guide rod includes the first guide rod and the second guide rod that are spaced apart, and the first guide rod and the second guide rod are located on a same side of the fastening base.

The second magnetic attachment member is located between the first guide rod and the second guide rod, or is located on a side that is of the first guide rod and that is away from the second guide rod, or is located on a side that is of the second guide rod and that is away from the first guide rod.

It may be understood that the second magnetic attachment member, the first guide rod, and the second guide rod are arranged more closely. In this way, a force between the housing and the fastening base is greater, and connections among the housing, the first guide rod, the second guide rod, and the fastening base are more stable.

In a possible implementation, the lens assembly includes a tunnel magnetoresistance sensor and a magnetic gate. One of the tunnel magnetoresistance sensor and the magnetic gate is fastened to the housing, and the other is fastened to the fastening base. The tunnel magnetoresistance sensor is configured to detect magnetic field strength of the magnetic gate at different positions.

It may be understood that, when the housing moves in the Z-axis direction relative to the fastening base, the housing may drive the magnetic gate to move in the Z-axis direction relative to the fastening base. The tunnel magnetoresistance sensor may detect magnetic field strength of the magnetic gate at a position. In this way, when the tunnel magnetoresistance sensor detects the magnetic field strength of the magnetic gate, displacement of the housing may be determined based on the magnetic field strength. It may be understood that the tunnel magnetoresistance sensor cooperates with the magnetic gate, to accurately control displacement of the housing moving relative to the fastening base in the Z-axis direction. This implements a closed-loop design of the lens assembly.

In addition, compared with a solution in which a Hall effect sensor and a magnet are used, a solution in which the tunnel magnetoresistance sensor cooperates with the magnetic gate is used in this implementation, the housing with large displacement can be accurately measured.

In a possible implementation, the first lens includes a lens cover, a first lens tube, and a first lens element. There are a plurality of first lens elements. At least one first lens element is fastened between the lens cover and the first lens tube. The remaining first lens elements are fastened to the first lens tube.

In a possible implementation, the second lens includes a second lens tube and a second lens element. The second lens element is fastened to the second lens tube.

In a possible implementation, the driving mechanism is configured to drive the fastening base to slide in the optical axis direction of the lens assembly.

In a possible implementation, the lens assembly includes a first buffer member, and the first buffer member is fastened to a bottom surface of the fastening base. In this way, when the housing drives the second lens to move in a positive direction of a Z axis, the first buffer member may buffer a collision force between a bottom plate of the housing and the fastening base, to avoid collision of the bottom plate of the housing or the fastening base.

### BRIEF DESCRIPTION OF DRAWINGS

To describe technical solutions in embodiments of this application, the following describes accompanying drawings used in describing embodiments of this application.
FIG. 1 is a schematic of a structure of an electronic device according to an embodiment of this application;
FIG. 2 is a cross-sectional schematic of a part of the electronic device shown in FIG. 1 at an A-A line;
FIG. 3 is a partial cross-sectional view of the electronic device shown in FIG. 2 in an ejected state;
FIG. 4 is an exploded schematic of a part of the camera module shown in FIG. 2;
FIG. 5 is an exploded schematic of a part of a lens assembly shown in FIG. 4;
FIG. 6 is an exploded schematic of a part of a lens motor shown in FIG. 5;
FIG. 7 is an exploded schematic of a housing shown in FIG. 6;
FIG. 8 is a schematic of structures of a first plate and a second plate shown in FIG. 7 at another angle;
FIG. 9 is a cross-sectional view of the housing shown in FIG. 6 at a B-B line;
FIG. 10 is a cross-sectional view of the housing shown in FIG. 9 at another angle;
FIG. 11 is a schematic of a structure of a fastening base shown in FIG. 6 at different angles;
FIG. 12 is a partial cross-sectional view of the lens motor shown in FIG. 5 at a C-C line;
FIG. 13 is a cross-sectional view of a part of the lens motor shown in FIG. 12 at another angle;
FIG. 14 is a partial cross-sectional view of the lens motor shown in FIG. 5 at a D-D line;
FIG. 15 is a partial cross-sectional view of the lens motor shown in FIG. 5 at an E-E line;
FIG. 16 is a partial cross-sectional view of the lens motor shown in FIG. 5 at an F-F line;
FIG. 17 is a partial cross-sectional view of the lens assembly shown in FIG. 4 at a G-G line;
FIG. 18 is a partial cross-sectional view of the electronic device shown in FIG. 2 in a focusing state;
FIG. 19 is a schematic of a structure of a motor circuit board shown in FIG. 6 at another angle;
FIG. 20 is a schematic of assembling the motor circuit board, the fastening base, and a bottom plate shown in FIG. 6;
FIG. 21 is a partial cross-sectional view of the lens assembly shown in FIG. 5 in another implementation;
FIG. 22 is a partial cross-sectional view of the lens assembly shown in FIG. 4 in another implementation;
FIG. 23 is a partial cross-sectional view of the camera module shown in FIG. 2 in another implementation;
FIG. 24 is a cross-sectional view of an electronic device according to an embodiment of this application;
FIG. 25 is a cross-sectional view of the electronic device shown in FIG. 24 in an ejected state; and
FIG. 26 is a cross-sectional view of the electronic device shown in FIG. 24 in a focusing state.

### DESCRIPTION OF EMBODIMENTS

For ease of understanding an optical lens group provided in embodiments of this application, meanings indicated by English abbreviations and related nouns in this application are as follows:
Optical axis: is an axis that passes through a center of each lens.

Object side: is bounded by a lens, and is a side on which a photographed object is located.

Image side: is bounded by a lens, and is a side on which an image of a photographed object is located.

The following describes embodiments of this application with reference to the accompanying drawings in embodiments of this application.

In descriptions of embodiments of this application, it should be noted that, unless otherwise clearly specified and limited, a term "connection" should be understood in a broad sense. For example, the "connection" may be a detachable connection, a nondetachable connection, may be a direct connection, or may be an indirect connection through an intermediary. "Fastened to" means a connection to each other with a changeless relative position relationship after the connection. "Slidably connected" means a connection to each other and relative sliding after the connection. Orientation terms mentioned in embodiments of this application, for example, "top", "bottom", "inside", and "outside", are merely directions for reference to the accompanying drawings. Therefore, the orientation terms are used to better and more clearly describe and understand embodiments of this application, but do not indicate or imply that a specified apparatus or element needs to have a specific orientation, and be constructed and operated in a specific orientation. Therefore, the orientation terms cannot be understood as a limitation on embodiments of this application. "A plurality of" means at least two.

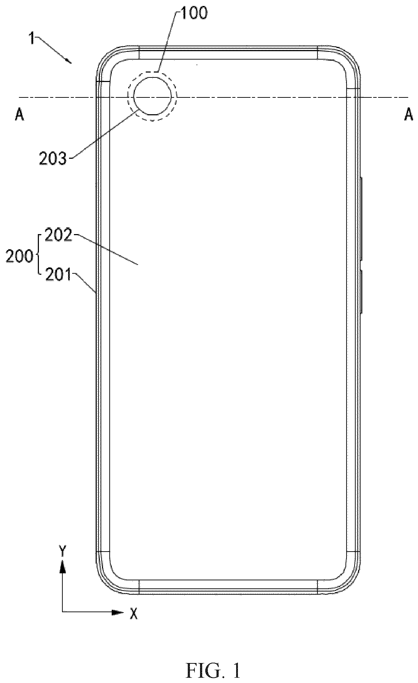

FIG. 1 is a schematic of a structure of an electronic device 1 according to an embodiment of this application. The electronic device 1 may be a device with photographing and video recording functions like a mobile phone, a tablet personal computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, a VR helmet, or the like. The electronic device 1 in the embodiment shown in FIG. 1 is described by using a mobile phone as an example.

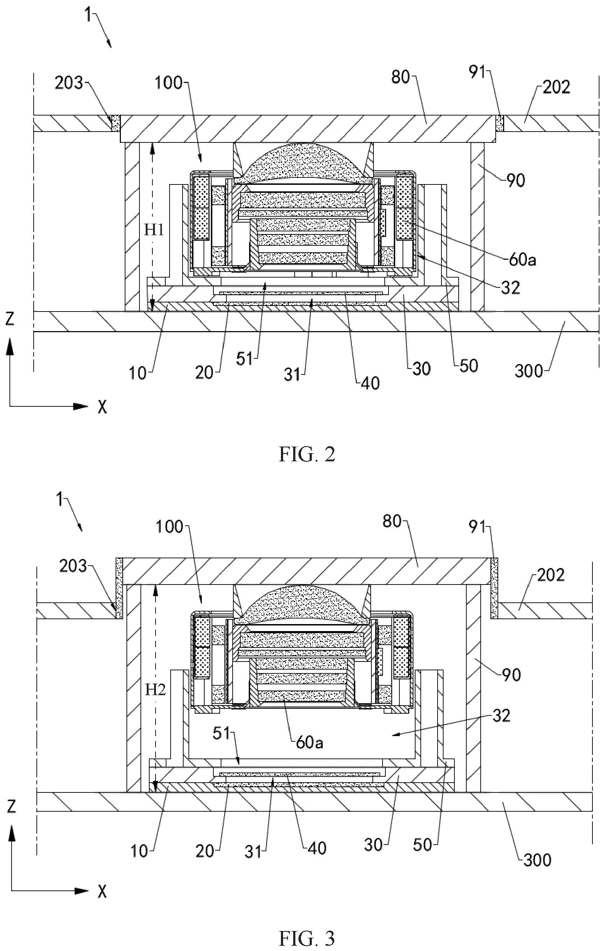

Refer to FIG. 1 and FIG. 2. FIG. 2 is a cross-sectional schematic of a part of the electronic device shown in FIG. 1 at an A-Aline. The electronic device 1 includes a camera module 100, a casing 200, and a screen 300. It should be noted that FIG. 1, FIG. 2, and the following related accompanying drawings schematically show only some components included in the electronic device 1, and actual shapes, actual sizes, actual locations, and actual structures of these components are not limited by FIG. 1, FIG. 2, and the following accompanying drawings. Because the camera module 100 is an internal structure of the electronic device 1, FIG. 1 schematically shows the camera module 100 by using a dashed line. For ease of description, a width direction of the electronic device 1 is defined as an X axis. A length direction of the electronic device 1 is defined as a Y axis. A thickness direction of the electronic device 1 is defined as a Z axis. It may be understood that a coordinate system of the electronic device 1 may be flexibly set according to a specific actual requirement.

In another embodiment, when the electronic device 1 includes some devices in other forms, the electronic device 1 may alternatively not include the screen 300.

For example, the casing 200 includes a frame 201 and a rear cover 202. The rear cover 202 is connected to the frame 201. The screen 300 is connected to the frame 201, and is disposed opposite to the rear cover 202. The screen 300, the frame 201, and the rear cover 202 may jointly enclose an inside of the electronic device 1. The inside of the electronic device 1 may be configured to place a component of the electronic device 1, for example, a battery, a receiver, or a microphone. The screen 300 may be configured to display an image or the like. The screen 300 may be a flat screen, or may be a curved screen.

In this implementation, the rear cover 202 is provided with a mounting hole 203. The mounting hole 203 penetrates two opposite surfaces of the rear cover 202. The mounting hole 203 connects the inside of the electronic device 1 to an outside of the electronic device 1.

In an implementation, the electronic device 1 further includes a camera decorative member 80, a driving apparatus 90, and a sealing member 91.

The camera decorative member 80 is movably connected to the rear cover 202. At least a part of the camera decorative member 80 may be located in the mounting hole 203. The camera decorative member 80 may separate the inside of the electronic device 1 from the outside of the electronic device 1.

The driving apparatus 90 may be located inside the electronic device 1. The driving apparatus 90 is connected to the camera decorative member 80. The driving apparatus 90 may be configured to drive the camera decorative member 80 to move in a Z-axis direction. It should be understood that a specific structure of the driving apparatus 90 is not limited. For example, the driving apparatus 90 may be a motor or a lifting mechanism.

The sealing member 91 may be connected to the camera decorative member 80 and the rear cover 202. The sealing member 91 is configured to seal a gap between the camera decorative member 80 and the mounting hole 203. A material of the sealing member 91 may be a flexible material (for example, soft adhesive or rubber). When the camera decorative member 80 moves in the Z-axis direction relative to the rear cover 202, the sealing member 91 may adapt to the gap between the camera decorative member 80 and the mounting hole 203 through deformation of the sealing member 91.

In another implementation, the camera decorative member 80 may also be fastened to the rear cover 202. In this case, the electronic device 1 may not include the driving apparatus 90.

In another implementation, the electronic device 1 may not include the sealing member 91. In this case, some structures of the camera decorative member 80 are used to seal the gap between the camera decorative member 80 and the mounting hole 203.

In this implementation, the camera module 100 is located inside the electronic device 1. The camera module 100 is a vertical camera module, that is, an optical axis direction of the camera module 100 is the Z-axis direction. The camera module 100 may be a rear-facing camera module, a front-facing camera module, or the like. FIG. 1 and FIG. 2 show that the camera module 100 is the rear-facing camera module.

In another implementation, a position of the camera module 100 is not specifically limited.

In this implementation, the camera module 100 is fastened to the camera decorative member 80. When the camera decorative member 80 moves in the Z-axis direction relative to the rear cover 202, the camera decorative member 80 may drive a part of the camera module 100 to move in the Z-axis direction.

In another implementation, when the camera decorative member 80 is fastened to the rear cover 202, the camera module 100 is fastened opposite to the rear cover 202.

In an implementation, at least a part of the camera decorative member 80 may be made of a transparent material (for example, glass or transparent plastic). In this way, ambient light outside the electronic device 1 may pass through the camera decorative member 80, and enter the inside of the electronic device 1. The camera module 100 collects the ambient light entering the inside of the electronic device 1.

It may be understood that the camera decorative member 80, the driving apparatus 90, and the sealing member 91 may be used as a part of the camera module 100. In other words, the camera decorative member 80, the driving apparatus 90, and the sealing member 91 may be used as a whole product with the camera module 100. In another implementation, the camera decorative member 80, the driving apparatus 90, the sealing member 91, and the camera module 100 may also be used as independent products.

Refer to FIG. 2 and FIG. 3. FIG. 3 is a partial cross-sectional view of the electronic device 1 shown in FIG. 2 in an ejected state. In this implementation, the electronic device 1 has three states: a non-ejected state (also referred to as a non-working state or a stopped state), an ejected state, and a focusing state. FIG. 2 shows that the electronic device 1 is in the non-ejected state. FIG. 3 shows that the electronic device 1 is in the ejected state. The focusing state of the electronic device 1 is described in detail below with reference to specific accompanying drawings. Details are not described herein again. It may be understood that the non-ejected state of the electronic device 1 may be a state in which the electronic device 1 does not perform photographing, or a state before photographing is started. The ejected state of the electronic device 1 may be a state in which the electronic device 1 is ready to perform photographing. The focusing state of the electronic device 1 may be a state of the electronic device 1 during photographing.

In this implementation, the electronic device 1 has the three states, and the camera module 100 also correspondingly has three states. In other words, the camera module 100 has the non-ejected state, the ejected state, and the focusing state. Details are not described herein again.

In another implementation, when the camera decorative member 80 is fastened to the rear cover 202, the electronic device 1 has two states: the non-ejected state (also referred to as a non-working state or a stopped state) and the focusing state. The camera module 100 also correspondingly has two states. In other words, the camera module 100 has the non-ejected state and the focusing state.

Refer to FIG. 2 and FIG. 3 again. When the electronic device 1 is in the non-ejected state (that is, the camera module 100 is in the non-ejected state), a height of the camera module 100 in the Z-axis direction is a first height H1. When the electronic device 1 is in the ejected state (that is, the camera module 100 is in the ejected state), a height of the camera module 100 in the Z-axis direction is a second height H2. The second height H2 is greater than the first height H1. It may be understood that in this implementation, a state of the camera module 100 (namely, the ejected state of the camera module 100) is additionally added, so that in a working process of the camera module 100, there is large focus adjustment space in the Z-axis direction. Specific descriptions are provided in the following text with reference to related accompanying drawings.

It may be understood that, when the electronic device 1 switches from the non-ejected state to the ejected state, the driving apparatus 90 drives the camera decorative member 80 to move relative to the rear cover 202 in a positive direction of a Z axis, at least a part of the camera decorative member 80 may move to the outside of the mounting hole 203, and the camera decorative member 80 may drive a part of the camera module 100 to move to the outside of the mounting hole 203. When the electronic device 1 switches from the ejected state to the non-ejected state, the driving apparatus 90 drives the camera decorative member 80 to move relative to the rear cover 202 in a negative direction of the Z axis, at least a part of the camera decorative member 80 may move to the mounting hole 203, and the camera decorative member 80 may drive a part of the camera module 100 to move to an inner side of the mounting hole 203.

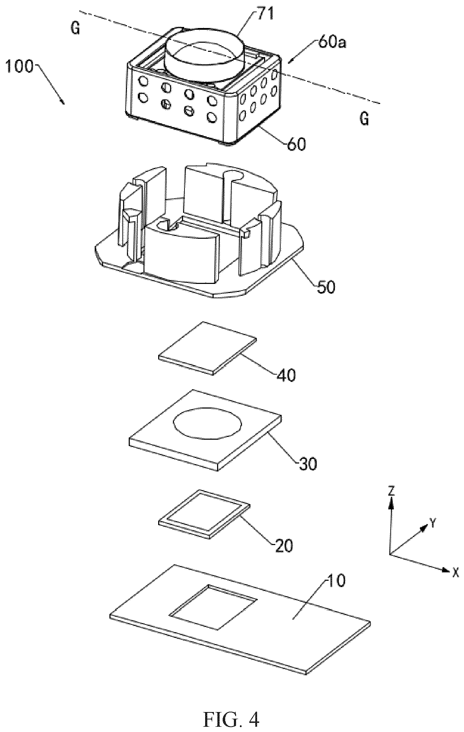

FIG. 4 is an exploded schematic of a part of the camera module 100 shown in FIG. 2. The camera module 100 includes a module circuit board 10, a photosensitive chip 20, a module support 30, an optical filter 40, a base 50, and a lens assembly 60a. The photosensitive chip 20 is also referred to as an image sensor or a photosensitive element. The photosensitive chip 20 is configured to collect ambient light, and convert image information carried in the ambient light into an electrical signal. It should be noted that an optical axis direction of the lens assembly 60a is a same direction as an optical axis direction of the camera module 100.

Refer to FIG. 4 with reference to FIG. 3. In an implementation, the photosensitive chip 20 is fastened to the module circuit board 10 and is electrically connected to the module circuit board 10. In this case, a signal may be transmitted between the photosensitive chip 20 and the module circuit board 10. The module support 30 is fastened to the module circuit board 10. The module support 30 and the photosensitive chip 20 are located on a same side of the module circuit board 10. The module support 30 is provided with a light transmission hole 31. The optical filter 40 is fastened to the module support 30, and is located in the light transmission hole 31. The optical filter 40 is further disposed opposite to the photosensitive chip 20. The optical filter 40 may be configured to filter infrared light, blue light, or the like of ambient light, to ensure that the photosensitive chip 20 has better imaging quality.

In an implementation, the base 50 is located on a side that is of the module support 30 and that is away from the module circuit board 10. The base 50 is fastened to the module support 30. The base 50 encloses movable space 32. The base 50 is provided with a light transmission hole 51. The light transmission hole 51 of the base 50 communicates with the movable space 32 and the light transmission hole 31 of the module support 30. The light transmission hole 51 of the base 50 is disposed opposite to the light transmission hole 31 of the module support 30.

In an implementation, the lens assembly 60a is movably connected to the base 50. At least a part of the lens assembly 60a is located in the movable space 32. For example, the lens assembly 60a may be slidably connected to the base 50. For example, a matching mechanism of a guide rail and a sliding slot is disposed between the lens assembly 60a and the base 50, so that the lens assembly 60a slides relative to the base 50.

Refer to FIG. 2 again. When the electronic device 1 is in a non-ejected state, most of the lens assembly 60a is located in the movable space 32. Refer to FIG. 3 again. When the electronic device 1 is in an ejected state, most of the lens assembly 60a is located outside the movable space 32. In this case, space (namely, a part of the movable space 32) enclosed by the lens assembly 60a, the base 50, and the module support 30 may be used as focus adjustment space of the camera module 100.

Refer to FIG. 2 and FIG. 3 again. When the electronic device 1 switches from the non-ejected state to the ejected state, the driving apparatus 90 drives the camera decorative member 80 to move relative to the rear cover 202 in the positive direction of the Z axis, the camera decorative member 80 may drive the lens assembly 60a to move in the positive direction of the Z axis, and a part of the lens assembly 60a moves from the movable space 32 to the outside of the movable space 32. In this case, a distance between the lens assembly 60a and the photosensitive chip 20 increases. When the electronic device 1 switches from the ejected state to the non-ejected state, the driving apparatus 90 drives the camera decorative member 80 to move relative to the rear cover 202 in the negative direction of the Z axis, the camera decorative member 80 may drive the lens assembly 60a to move in the negative direction of the Z axis, and a part of the lens assembly 60a moves from the outside of the movable space 32 to the movable space 32. In this case, the distance between the lens assembly 60a and the photosensitive chip 20 decreases.

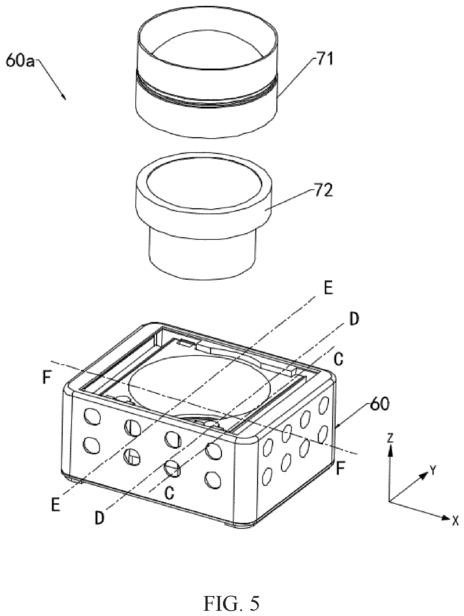

Refer to FIG. 5 with reference to FIG. 4. FIG. 5 is an exploded schematic of a part of the lens assembly 60a shown in FIG. 4. The lens assembly 60a includes a lens motor 60, a first lens 71, and a second lens 72. Both the first lens 71 and the second lens 72 are disposed on the lens motor 60. The lens motor 60 is configured to drive the second lens 72 to move relative to the first lens 71 in a Z-axis direction, to implement auto focus (auto focus, AF) of the lens assembly 60a. Specific connection relationships between the first lens 71, the second lens 72, and the lens motor 60 are specifically described below with reference to related accompanying drawings.

It may be understood that the lens motor 60 may be a voice coil motor, an SMA (shape memory alloy, shape memory alloy) motor, or a motor of another structure. This is not specifically limited in this application. It should be understood that the SMA motor may be a motor that generates a driving force through contraction of an SMA wire. A material of the SMA wire may be a nickel-titanium alloy material. In addition, an SMA is a general term for a class of metals with shape memory effects. In this implementation, the lens motor 60 is described by using a voice coil motor as an example.

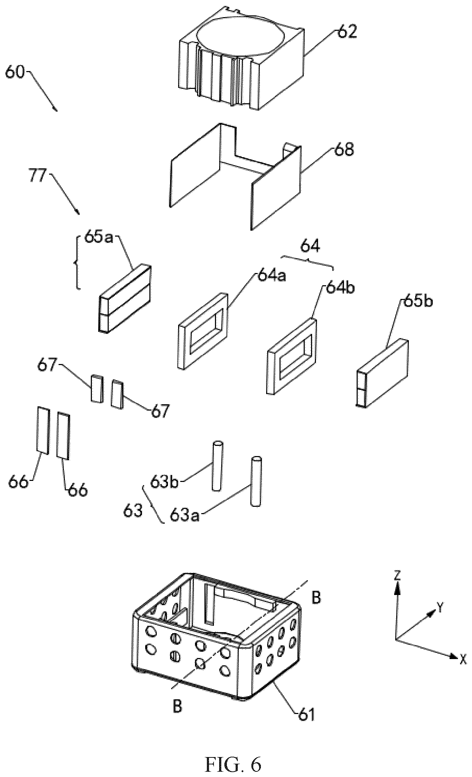

FIG. 6 is an exploded schematic of a part of the lens motor 60 shown in FIG. 5. The lens motor 60 includes a housing 61, a fastening base 62, a guide rod 63, a coil 64, a magnet 65, a first magnetic attachment member 66, a second magnetic attachment member 67, and a motor circuit board 68. In this implementation, there are two guide rods 63, two coils 64, two magnets 65, two first magnetic attachment members 66, and two second magnetic attachment members 67. Specifically, the guide rods 63 include a first guide rod 63a and a second guide rod 63b. The coils 64 include a first coil 64a and a second coil 64b. The magnets 65 include a first magnet 65a and a second magnet 65b. The first magnetic attachment members 66 use a same number. The two second magnetic attachment members 67 use a same number. In another implementation, quantities of guide rods 63, coils 64, magnets 65, first magnetic attachment members 66, and second magnetic attachment members 67 are not specifically limited.

In this implementation, the coil 64 and the magnet 65 may form a driving mechanism 77 of the lens motor 60. In this way, a structure of the driving mechanism 77 in this implementation is simple. In another implementation, the driving mechanism 77 of the lens motor 60 may also be another mechanism, for example, a lifting mechanism.

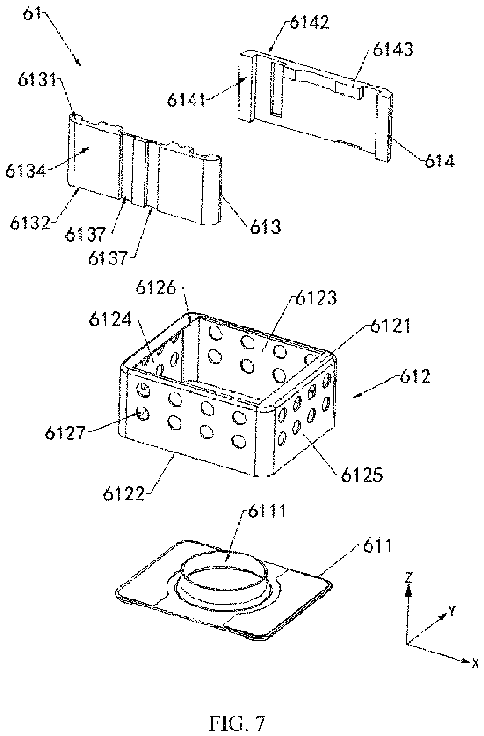

FIG. 7 is an exploded schematic of the housing 61 shown in FIG. 6. The housing 61 includes a bottom plate 611, a frame 612, a first plate 613, and a second plate 614.

For example, the bottom plate 611 is provided with a light transmission hole 6111. The frame 612 is provided with heat dissipation holes 6127.

The frame 612 includes a top plate 6121, a first side plate 6122 and a second side plate 6123 that are oppositely disposed, and a third side plate 6124 and a fourth side plate 6125 that are oppositely disposed. The third side plate 6124 and the fourth side plate 6125 are connected to and disposed between the first side plate 6122 and the second side plate 6123. The top plate 6121 is connected to and disposed between the first side plate 6122 and the second side plate 6123, and is connected to and disposed between the third side plate 6124 and the fourth side plate 6125. The top plate 6121 is provided with a through hole 6126. The heat dissipation holes 6127 may be distributed in the first side plate 6122, the second side plate 6123, the third side plate 6124, and the fourth side plate 6125. In another implementation, a shape of the frame 612 is not limited to a cuboid shown in FIG. 7, for example, a bucket shape.

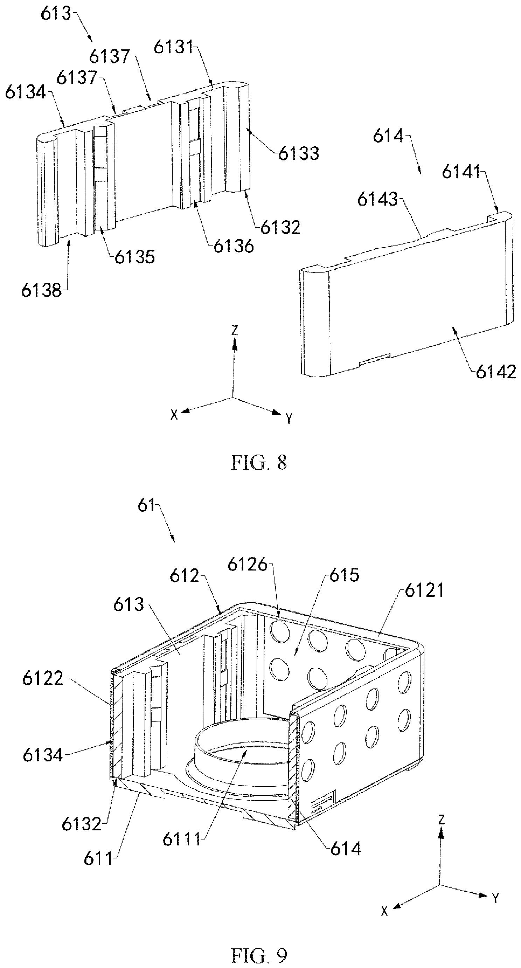

Refer to FIG. 8 with reference to FIG. 7. FIG. 8 is a schematic of structures of the first plate 613 and the second plate 614 shown in FIG. 7 at another angle. The first plate 613 includes a top surface 6131 and a bottom surface 6132 that are oppositely disposed, and a first plate surface 6133 and a second plate surface 6134 that are oppositely disposed. The first plate surface 6133 and the second plate surface 6134 are connected to and disposed between the top surface 6131 and the bottom surface 6132.

In an implementation, the first plate 613 is provided with a first groove 6135 and a second groove 6136 that are spaced apart. An opening of the first groove 6135 is located on the top surface 6131, the bottom surface 6132, and the first plate surface 6133. An opening of the second groove 6136 is located on the top surface 6131, the bottom surface 6132, and the first plate surface 6133.

For example, a groove wall of the first groove 6135 may be of a "V" shape. A groove wall of the second groove 6136 may be of a "[" shape, a circle, a U shape, or the like. In another implementation, the groove wall of the second groove 6136 may be of a "V" shape. The groove wall of the first groove 6135 may be of a "[" shape, a circle, a U shape, or the like.

In an implementation, the first plate 613 is provided with a third fastening groove 6138. An opening of the third fastening groove 6138 may be located on the top surface 6131, the bottom surface 6132, and the first plate surface 6133. In another implementation, the opening of the third fastening groove 6138 may also be located only on the first plate surface 6133.

Refer to FIG. 7 with reference to FIG. 8. The first plate 613 is provided with a first fastening groove 6137. An opening of the first fastening groove 6137 may be located on the top surface 6131, the bottom surface 6132, and the second plate surface 6134. In another implementation, the opening of the first fastening groove 6137 may also be located only on the second plate surface 6134. A quantity of first fastening grooves is not limited to the two first fastening grooves shown in FIG. 7 and FIG. 8. The quantity of first fastening grooves may be the same as a quantity of first magnetic attachment members 66 (refer to FIG. 6).

Refer to FIG. 7 again with reference to FIG. 8. In an implementation, the second plate 614 includes a first plate surface 6141 and a second plate surface 6142 that are oppositely disposed. The second plate 614 has a bump 6143. The bump 6143 is a structure that is of the first plate surface 6141 of the second plate 614 and that protrudes in a direction away from the second plate surface 6142. At least a part (that is, a part or all) of a surface that is of the bump 6143 and that faces away from the second plate surface 6142 is a cambered surface.

FIG. 9 is a cross-sectional view of the housing 61 shown in FIG. 6 at a B-B line. The frame 612 is fastened to peripheral edges of the bottom plate 611, and is disposed around the light transmission hole 6111 of the bottom plate 611. The through hole 6126 of the top plate 6121 is disposed opposite to the light transmission hole 6111 of the bottom plate 611.

In this implementation, the frame 612 may be fastened to the bottom plate 611 through welding, bonding, or the like. In another implementation, the frame 612 and the bottom plate 611 may also be an integrated structure, that is, the frame 612 and the bottom plate 611 are entirety.

Refer to FIG. 9 again. The first plate 613 is fastened to the frame 612. For example, the second plate surface 6134 of the first plate 613 may be fastened to the first side plate 6122 of the frame 612 through a fastening manner like welding or bonding. In another implementation, the first plate 613 and the frame 612 may also be an integrated structure, that is, the first plate 613 and the frame 612 form entirety.

For example, the bottom surface 6132 of the first plate 613 may be fastened to the bottom plate 611 through a fastening manner like welding or bonding. In this way, connections among the first plate 613, the frame 612, and the bottom plate 611 are more secure. In another implementation, the first plate 613 and the bottom plate 611 may also be an integrated structure.

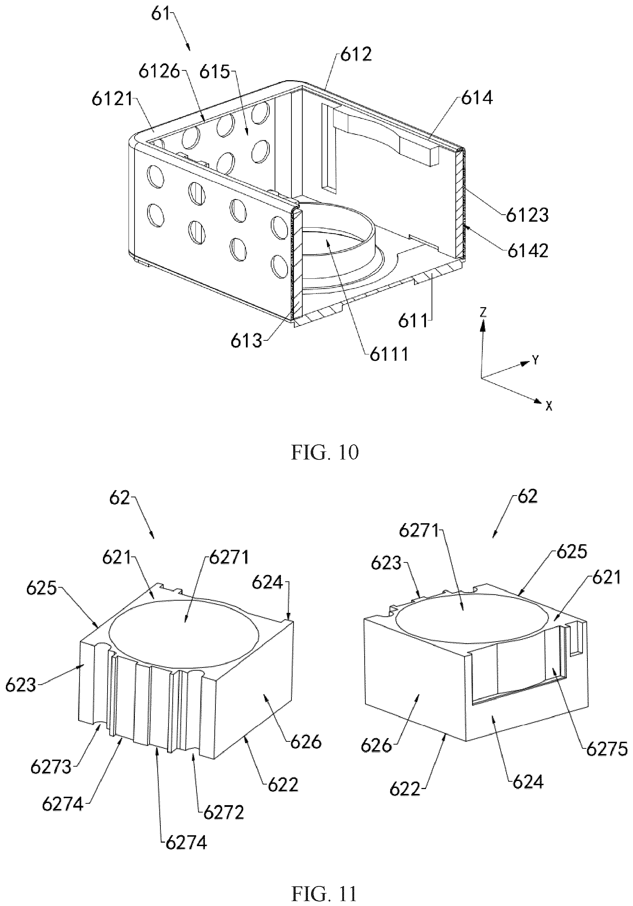

FIG. 10 is a cross-sectional view of the housing 61 shown in FIG. 9 at another angle. The second plate 614 is fastened to the frame 612. For example, the second plate surface 6142 of the second plate 614 may be fastened to the second side plate 6123 of the frame 612 through a fastening manner like welding or bonding. In another implementation, the second plate 614 and the frame 612 may also be an integrated structure.

For example, the second plate 614 may be fastened to the bottom plate 611 through a fastening manner like welding or bonding. In this way, connections among the second plate 614, the frame 612, and the bottom plate 611 are more secure. In another implementation, the second plate 614 and the bottom plate 611 may also be an integrated structure.

Refer to FIG. 9 and FIG. 10 again. The bottom plate 611, the frame 612, the first plate 613, and the second plate 614 enclose accommodating space 615, namely, internal space of the housing 61. The accommodating space 615 communicates with the through hole 6126 of the top plate 6121 and the light transmission hole 6111 of the bottom plate 611.

FIG. 11 is a schematic of a structure of the fastening base 62 shown in FIG. 6 at different angles. In an implementation, the fastening base 62 includes a top surface 621 and a bottom surface 622 that are oppositely disposed, a first side surface 623 and a second side surface 624 that are oppositely disposed, and a third side surface 625 and a fourth side surface 626 that are oppositely disposed. The first side surface 623 and the second side surface 624 are connected between the top surface 621 and the bottom surface 622. The third side surface 625 and the fourth side surface 626 are connected between the top surface 621 and the bottom surface 622, and are connected between the first side surface 623 and the second side surface 624.

For example, the fastening base 62 is provided with a fastening hole 6271. An opening of the fastening hole 6271 is located on the top surface 621 and the bottom surface 622.

For example, the fastening base 62 is provided with a third groove 6272 and a fourth groove 6273 that are spaced apart. An opening of the third groove 6272 may be located on the top surface 621, the bottom surface 622, and the first side surface 623. An opening of the fourth groove 6273 may be located on the top surface 621, the bottom surface 622, and the first side surface 623. For example, groove walls of the third groove 6272 and the fourth groove 6273 may be of an arc shape, a "[" shape, a U shape, or the like.

In an implementation, the fastening base 62 is provided with a second fastening groove 6274. An opening of the second fastening groove 6274 may be located on the top surface 621, the bottom surface 622, and the first side surface 623. In another implementation, the opening of the second fastening groove 6274 may also be located only on the first side surface 623.

For example, there are two second fastening grooves 6274. The two second fastening grooves 6274 may be located between the third groove 6272 and the fourth groove 6273. In another implementation, a quantity and positions of the second fastening grooves 6274 are not specifically limited.

For example, the fastening base 62 is provided with an avoidance groove 6275. An opening of the avoidance groove 6275 is located on the second side surface 624. At least a part of a bottom wall of the avoidance groove 6275 is a cambered surface.

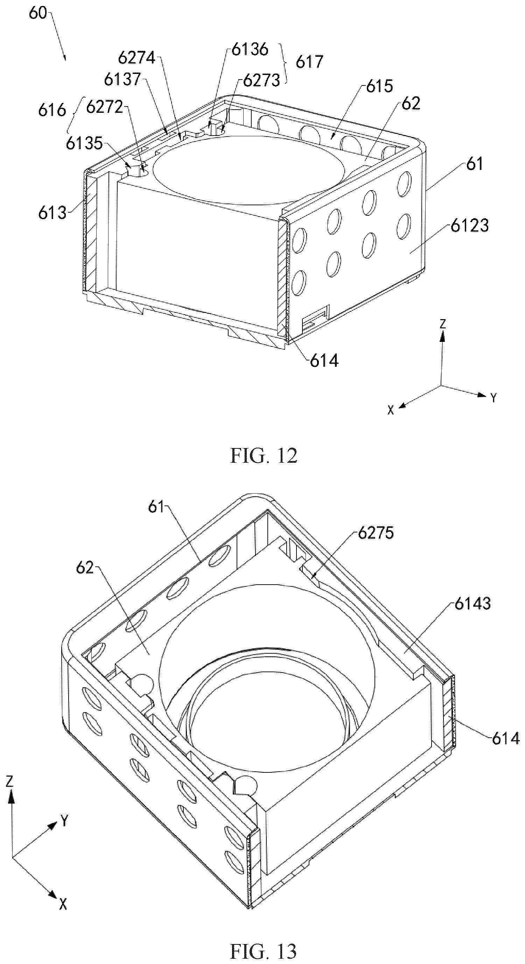

FIG. 12 is a partial cross-sectional view of the lens motor 60 shown in FIG. 5 at a C-C line. The fastening base 62 is slidably connected to the housing 61. At least a part of the fastening base 62 may be located in the accommodating space 615 of the housing 61, that is, the at least a part of the fastening base 62 may be located inside the housing 61. For example, the housing 61 may slide relative to the fastening base 62 in a Z-axis direction.

In this implementation, the first groove 6135 (FIG. 8 shows the first groove 6135 at different angles) of the first plate 613 and the third groove 6272 (FIG. 11 shows the fourth groove 6273 at different angles) of the fastening base 62 enclose a first sliding groove 616. The second groove 6136 (FIG. 8 shows the second groove 6136 at different angles) of the first plate 613 and the fourth groove 6273 (FIG. 11 shows the fourth groove 6273 at different angles) of the fastening base 62 enclose a second sliding groove 617.

Refer to FIG. 12 again. The first fastening groove 6137 (FIG. 7 shows the first fastening groove 6137 at different angles) of the first plate 613 is disposed opposite to the second fastening groove 6274 (FIG. 11 shows the second fastening groove 6274 at different angles) of the fastening base 62. When there are a plurality of first fastening grooves 6137 and a plurality of second fastening grooves 6274, the plurality of first fastening grooves 6137 and the plurality of second fastening grooves 6274 are disposed opposite to each other in a one-to-one correspondence.

FIG. 13 is a cross-sectional view of a part of the lens motor 60 shown in FIG. 12 at another angle. At least a part of the bump 6143 on the second plate 614 is located in the avoidance groove 6275 of the fastening base 62. A cambered surface of the bump 6143 may match a cambered surface of the avoidance groove 6275.

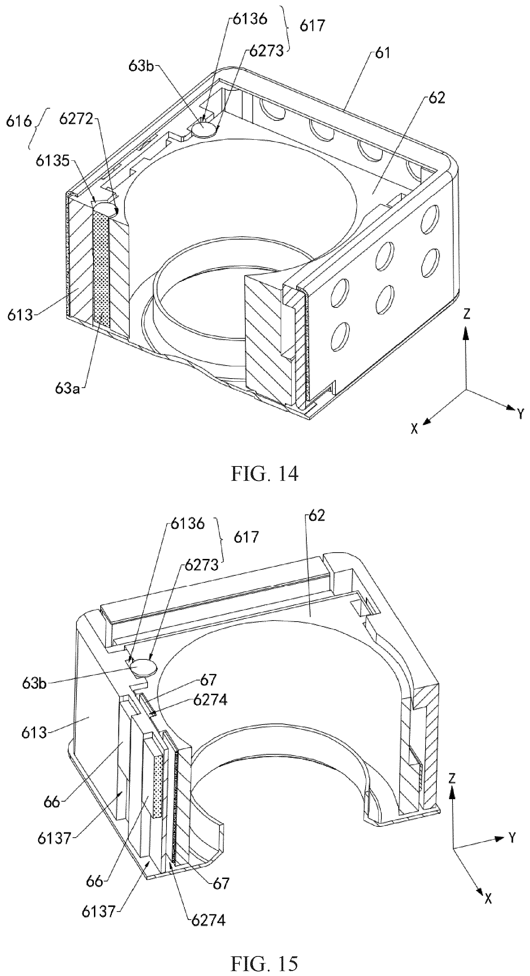

FIG. 14 is a partial cross-sectional view of the lens motor 60 shown in FIG. 5 at a D-D line. A length extension direction of the first guide rod 63a may be a Z-axis direction. The first guide rod 63a is disposed in the first sliding groove 616. The first guide rod 63a may be fastened in the third groove 6272 of the fastening base 62. The first guide rod 63a may slide relative to the first groove 6135. It may be understood that the first guide rod 63a may also be fastened to the fastening base 62 through bonding, welding, or the like. In another implementation, the first guide rod 63a and the fastening base 62 may form an integrally formed mechanical part.

In another implementation, the first groove 6135 may also be disposed on the fastening base 62. The third groove 6272 may also be disposed on the first plate 613. In this case, the first guide rod 63a may also be fastened in the third groove 6272 of the first plate 613. The first guide rod 63a slides relative to the first groove 6135 of the fastening base 62.

Refer to FIG. 14 again. A length extension direction of the second guide rod 63b may be the Z-axis direction. The second guide rod 63b is disposed in the second sliding groove 617. The second guide rod 63b may be fastened in the fourth groove 6273 of the fastening base 62. The second guide rod 63b may slide relative to the second groove 6136. It may be understood that the second guide rod 63b may also be fastened to the fastening base 62 through bonding, welding, or the like. In another implementation, the second guide rod 63b and the fastening base 62 may form an integrally formed mechanical part.

In another implementation, the second groove 6136 may also be disposed on the fastening base 62. The fourth groove 6273 may also be disposed on the first plate 613. In this case, the second guide rod 63b may also be fastened in the fourth groove 6273 of the first plate 613. The first guide rod 63a slides relative to the second groove 6136 of the fastening base 62.

In this implementation, matching between the first guide rod 63a and the first sliding groove 616 and matching between the second guide rod 63b and the second sliding groove 617 may play a guiding function in a process in which the housing 61 slides relative to the fastening base 62, so that a sliding direction of the housing 61 relative to the fastening base 62 is more accurate, and the housing 61 is not easily deviated. In addition, compared with a solution in which the fastening base 62 is driven to move through deformation of a spring plate, a solution in this implementation is that through matching between the first guide rod 63a and the first sliding groove 616 and matching between the second guide rod 63b and the second sliding groove 617, a sliding distance of the housing 61 relative to the fastening base 62 may be longer without being limited to the first guide rod 63a and the second guide rod 63b. For example, a maximum distance for which the housing 61 can slide in the Z-axis direction relative to the fastening base 62 may be 5 millimeters. In this case, a distance at which the housing 61 can slide in the Z-axis direction relative to the fastening base 62 is within a range of 0 millimeters to 5 millimeters.

As shown in FIG. 13, the cambered surface of the bump 6143 of the second plate 614 matches the avoidance groove 6275 of the fastening base 62. This can further guide a process in which the housing 61 slides relative to the fastening base 62. In this way, in the process in which the housing 61 slides relative to the fastening base 62, the housing 61 is more stable, that is, the housing 61 is not prone to tilt.

FIG. 15 is a partial cross-sectional view of the lens motor 60 shown in FIG. 5 at an E-E line. The first magnetic attachment member 66 is fastened in the first fastening groove 6137 of the first plate 613. The second magnetic attachment member 67 is fastened in the second fastening groove 6274 of the fastening base 62. The first magnetic attachment member 66 and the second magnetic attachment member 67 may be mutually sucked. In this implementation, the first magnetic attachment member 66 and the second magnetic attachment member 67 may generate magnetic attraction in a Y-axis direction. In this way, the first plate 613, the first guide rod 63a, the second guide rod 63b, and the fastening base 62 may maintain contact under effect of attachment. In this case, the fastening base 62 is not easy to shake relative to the first plate 613. As shown in FIG. 14, because the groove wall of the first groove 6135 is of a "V" shape, when the first magnetic attachment member 66 and the second magnetic attachment member 67 generate magnetic attraction in the Y-axis direction, the two groove walls of the first groove 6135 may exert an acting force on the first guide rod 63a. In this way, the two groove walls of the first groove 6135 may clamp the first guide rod 63a. The first plate 613, the first guide rod 63a, and the fastening base 62 are connected more stably. In addition, the second groove 6136 of the first plate 613 is disposed to be in a "[" shape, a circle, or a U shape, so that a specific error may be reserved between the groove wall of the second groove 6136 and the second guide rod 63b in an X-axis direction, and the second guide rod 63b and the second groove 6136 are not difficult to be assembled due to a position error.

Refer to FIG. 15 again. In this implementation, there are two first magnetic attachment members 66 and two second magnetic attachment members 67. The two first magnetic attachment members 66 are fastened in the two first fastening grooves 6137 in a one-to-one correspondence. The two second magnetic attachment members 67 are fastened in the two second fastening grooves 6274 in a one-to-one correspondence. In this way, in the Y-axis direction, an acting force between the first plate 613 and the fastening base 62 is greater, and connections among the first plate 613, the first guide rod 63a, the second guide rod 63b, and the fastening base 62 are more stable. In another implementation, a quantity of first magnetic attachment members 66 and a quantity of second magnetic attachment members 67 are not specifically limited.

In an implementation, both the first magnetic attachment member 66 and the second magnetic attachment member 67 may be magnets.

In an implementation, one of the first magnetic attachment member 66 and the second magnetic attachment member 67 is a magnet, and the other is a magnetic conductive member.

In this implementation, the two second magnetic attachment members 67 are located between the first guide rod 63a and the second guide rod 63b. In this way, magnetic attraction generated by the two first magnetic attachment members 66 and the two second magnetic attachment members 67 is centralized. This helps improve connection stability between the first plate 613, the first guide rod 63a, the second guide rod 63b, and the fastening base 62.

In another implementation, the second magnetic attachment member 67 is located on a side that is of the first guide rod 63a and that is away from the second guide rod 63b.

In another implementation, the second magnetic attachment member 67 is located on a side that is of the second guide rod 63b and that is away from the first guide rod 63a.

In another implementation, when there are two second magnetic attachment members 67, one second magnetic attachment member 67 is located on a side that is of the first guide rod 63a and that is away from the second guide rod 63b, and one second magnetic attachment member 67 is located on a side that is of the second guide rod 63b and that is away from the first guide rod 63a.

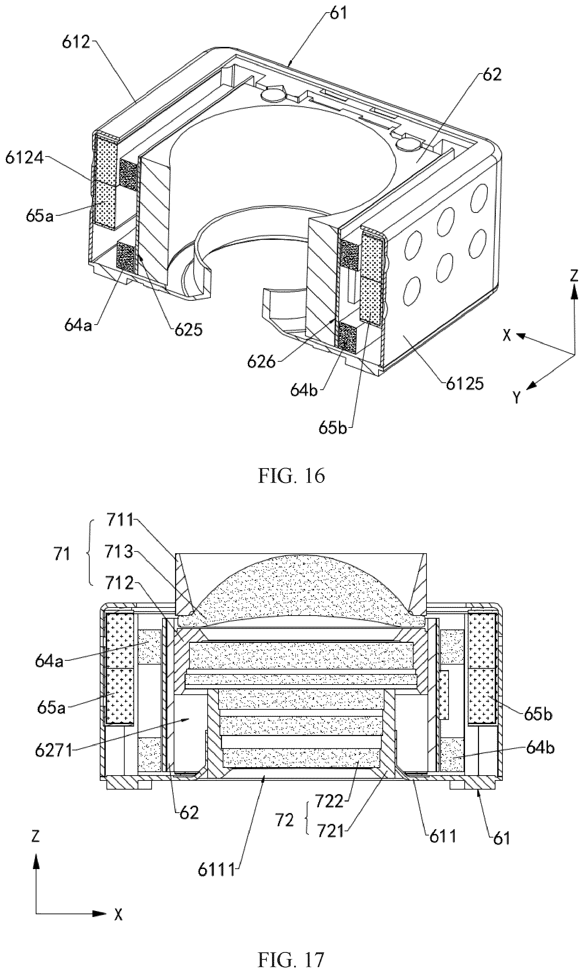

FIG. 16 is a partial cross-sectional view of the lens motor 60 shown in FIG. 5 at an F-F line. Both the first magnet 65a and the second magnet 65b are fastened to the housing 61. For example, the first magnet 65a is fastened to the third side plate 6124 of the frame 612. The second magnet 65b is fastened to the fourth side plate 6125 of the frame 612.

In an implementation, the first magnet 65a may be first fastened to a first magnetic conductive member (not shown in the figure), and then the first magnetic conductive member is fastened to the third side plate 6124 of the frame 612. The first magnetic conductive member is configured to improve magnetism of the first magnet 65a. For example, a shape of the first magnetic conductive member may be a "frame" shape.

In an implementation, the second magnet 65b may also be first fastened to a second magnetic conductive member, and then the second magnetic conductive member is fastened to the fourth side plate 6125 of the frame 612. The second magnetic conductive member is configured to improve magnetism of the second magnet 65b. For example, a shape of the second magnetic conductive member may be a "frame" shape.

Refer to FIG. 16 again. Both the first coil 64a and the second coil 64b are fastened to the fastening base 62. For example, the first coil 64a may be fastened to the third side surface 625 of the fastening base 62, and disposed opposite to the first magnet 65a. The second coil 64b may be fastened to the fourth side surface 626 of the fastening base 62, and disposed opposite to the second magnet 65b. It may be understood that, when a signal is applied to the first coil 64a and the second coil 64b, the first magnet 65a may cooperate with the first coil 64a, and the second magnet 65b may cooperate with the second coil 64b, to push the housing 61 to slide relative to the fastening base 62 in an X-axis direction.

In another implementation, fastened positions of the first magnet 65a and the first coil 64a may be exchanged. Fastened positions of the second magnet 65b and the second coil 64b may be exchanged.

Refer to FIG. 16 again. In this implementation, the first magnet 65a and the second magnet 65b are fastened to the housing 61, and the first coil 64a and the second coil 64b are fastened to the fastening base 62, so that the housing 61 is driven to slide relative to the fastening base 62 in the Z-axis direction by using a Loren force generated by the first magnet 65a and the first coil 64a, and a Loren force generated by the second magnet 65b and the second coil 64b. In addition, as shown in FIG. 14, matching disposing of the first guide rod 63a and the first sliding groove 616 and matching disposing of the second guide rod 63b and the second sliding groove 617 may play a guiding function in a process in which the housing 61 slides relative to the fastening base 62, so that the housing 61 slides more accurately in the Z-axis direction, that is, the housing 61 is not easily deviated. In addition, as shown in FIG. 15, the first magnetic attachment member 66 is fastened in the first fastening groove 6137 of the first plate 613, and the second magnetic attachment member 67 is fastened in the second fastening groove 6274 of the fastening base 62, so that the first plate 613, the first guide rod 63a, the second guide rod 63b, and the fastening base 62 are closely connected by using magnetic attraction generated by the first magnetic attachment member 66 and the second magnetic attachment member 67 in a Y-axis direction. In this way, the fastening base 62 is not easy to shake relative to the first plate 613.

FIG. 17 is a partial cross-sectional view of the lens assembly 60a shown in FIG. 4 at a G-G line. In an implementation, the first lens 71 includes a lens cover 711, a first lens tube 712, and a first lens element 713. There may be one or more first lens elements 713. When there are a plurality of first lens elements 713, the plurality of first lens elements 713 may be sequentially disposed in the Z-axis direction. For example, at least one first lens element 713 is fastened between the lens cover 711 and the first lens tube 712. The remaining first lens elements 713 are fastened to the first lens tube 712.

There are three first lens elements 713 in this implementation. The first lens elements 713 are fastened to the first lens tube 712. The lens cover 711 is fastened to the first lens tube 712. For example, a first piece of the first lens element 713 is fastened between the lens cover 711 and the first lens tube 712, that is, the first piece of the first lens element 713 is further fastened to the lens cover 711. The remaining first lens elements 713 are fastened in the first lens tube 712. In another implementation, fastened positions of the first lens elements 713 are not limited.

In an implementation, the second lens 72 includes a second lens tube 721 and a second lens element 722. There may be one or more second lens elements 722. When there are a plurality of second lens elements 722, the plurality of second lens elements 722 may be sequentially disposed in the Z-axis direction. There are three second lens elements 722 in this implementation. The second lens elements 722 are fastened to the second lens tube 721.

In an implementation, the first lens 71 is fastened to the fastening base 62. At least a part of the first lens 71 is located in the fastening hole 6271 of the fastening base 62. For example, the first lens tube 712 of the first lens 71 may be fastened to a hole wall of the fastening hole 6271 through bonding or the like.

In an implementation, the second lens 72 is fastened to the bottom plate 611 of the housing 61. An image side of the second lens 72 is disposed opposite to the light transmission hole 6111 of the bottom plate 611. The second lens 72 is located on an image side of the first lens 71.

FIG. 17 is a schematic of a structure of the lens assembly 60a when the electronic device 1 is in an ejected state. In this way, when the electronic device 1 is in the ejected state, at least a part of the second lens 72 may be located in the fastening hole 6271 of the fastening base 62. In this case, the second lens 72 is disposed close to the first lens 72.

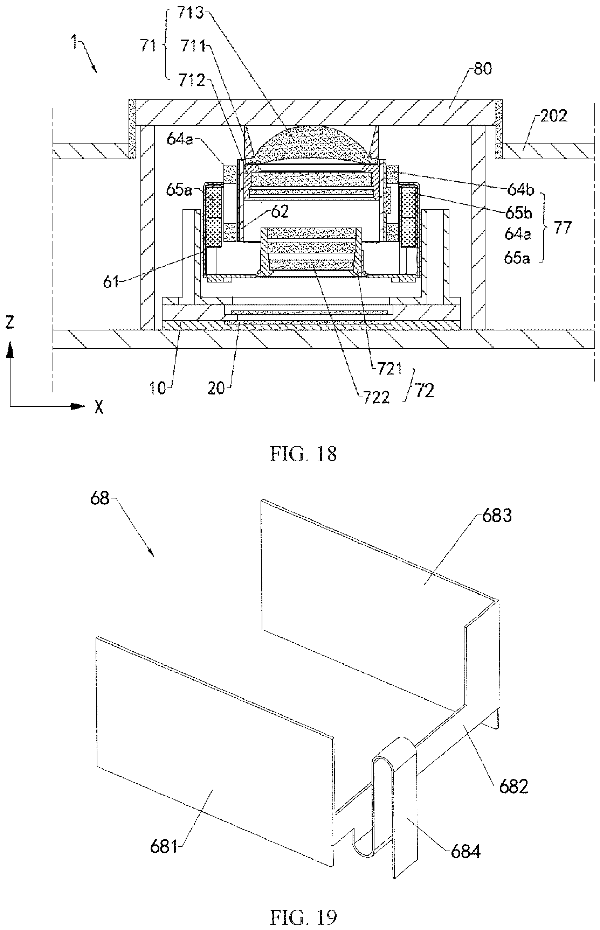

FIG. 18 is a partial cross-sectional view of the electronic device 1 shown in FIG. 2 in a focusing state. The first lens 71 is fastened to the camera decorative member 80. For example, the lens cover 711 of the first lens 71 is fastened to the camera decorative member 80 through bonding or the like.

When the electronic device 1 is in the focusing state, a small part of the second lens 72 may be located in the fastening hole 6271 of the fastening base 62. In this case, the second lens 72 is disposed away from the first lens 71. In other words, a distance between the first lens 71 and the second lens 72 corresponding to the focusing state of the electronic device 1 is greater than a distance between the first lens 71 and the second lens 72 corresponding to the ejected state of the electronic device 1.

It may be understood that, when the electronic device 1 switches from the ejected state to the focusing state, the housing 61 slides in a negative direction of a Z axis under driving of the first magnet 65a and the first coil 64a and driving of the second magnet 65b and the second coil 64b. In this case, the housing 61 may drive the first magnet 65a, the second magnet 65b, and the second lens 72 to move in the negative direction of the Z axis. The distance between the second lens 72 and the first lens 71 increases, and a distance between the second lens 72 and the photosensitive chip 20 decreases. When the electronic device 1 switches from the focusing state to the ejected state, the housing 61 slides in a positive direction of the Z axis under driving of the first magnet 65a and the first coil 64a and driving of the second magnet 65b and the second coil 64b. In this case, the housing 61 may drive the first magnet 65a, the second magnet 65b, and the second lens 72 to move in the positive direction of the Z axis. The distance between the second lens 72 and the first lens 71 decreases, and the distance between the second lens 72 and the photosensitive chip 20 increases.

It may be understood that, when the electronic device 1 is in the ejected state, if the camera module 100 can perform photographing normally, the camera module 100 does not need to focus. In this case, the ejected state of the electronic device 1 may also be the focusing state of the electronic device 1.

In this implementation, because a maximum distance for which the housing 61 slides in the Z-axis direction relative to the fastening base 62 may be 5 millimeters, a maximum focusing distance of the camera module 100 may be 5 millimeters. In other words, a focusing stroke of the camera module 100 is within a range of 0 millimeters to 5 millimeters. The foregoing specifically describes a structure of an implementation of the lens assembly 60a with reference to related accompanying drawings. The following describes in detail another disposing manner of the lens assembly 60a with reference to related accompanying drawings.

First, with reference to related accompanying drawings, a manner of electrically connecting the first coil 64a and the second coil 64b to an external device is specifically described.

FIG. 19 is a schematic of a structure of the motor circuit board 68 shown in FIG. 6 at another angle. The motor circuit board 68 includes a first portion 681, a second portion 682, a third portion 683, and a fourth portion 684. The second portion 682 is connected between the first portion 681 and the third portion 683. The first portion 681 and the third portion 683 are disposed opposite to each other. The fourth portion is connected to the second portion.

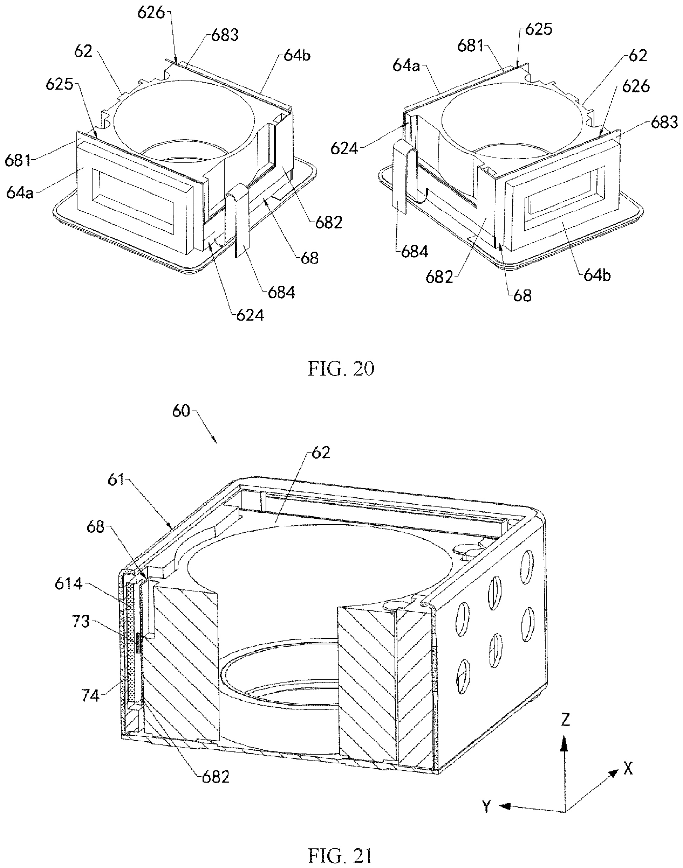

FIG. 20 is a schematic of assembling the motor circuit board 68, the fastening base 62, and the bottom plate 611 shown in FIG. 6. The motor circuit board 68 is fastened to the fastening base 62. For example, the first portion 681 of the motor circuit board 68 is fastened to the third side surface 625 of the fastening base 62. The third portion 683 of the motor circuit board 68 is fastened to the fourth side surface 626 of the fastening base 62. The second portion 682 of the motor circuit board 68 is fastened to the second side surface 624 of the fastening base 62.

Refer to FIG. 20 with reference to FIG. 12. The fourth portion 684 of the motor circuit board 68 may pass through the second plate 614 and the second side plate 6123 of the housing 61, and extend to the outside of the housing 61. The fourth portion 684 of the motor circuit board 68 may be configured to be electrically connected to the module circuit board 10 (refer to FIG. 18). In this way, electrical signals may be transmitted between the module circuit board 10 and the motor circuit board 68.

Refer to FIG. 20 again. The first coil 64a is fastened to the first portion 681 of the motor circuit board 68, and is electrically connected to the motor circuit board 68. In this way, the first coil 64a, the motor circuit board 68, and the module circuit board 10 (refer to FIG. 18) may form a current loop.

The second coil 64b is fastened to the third portion 683 of the motor circuit board 68, and is electrically connected to the motor circuit board 68. In this way, the second coil 64b, the motor circuit board 68, and the module circuit board 10 (refer to FIG. 18) may form a current loop.

In another implementation, the lens motor 60 may not include the motor circuit board 68. The first coil 64a may be electrically connected to the module circuit board 10 through a wire. The second coil 64b may be electrically connected to the module circuit board 10 through a wire.

Next, the following specifically describes a closed-loop arrangement of the lens assembly 60a with reference to related accompanying drawings.

Refer to FIG. 21 with reference to FIG. 20. FIG. 21 is a partial cross-sectional view of the lens assembly 60a shown in FIG. 5 in another implementation. The lens motor 60 may further include a tunnel magnetoresistance (Tunnel Magnetoresistance, TMR) sensor 73 and a magnetic gate 74. The tunnel magnetoresistance sensor 73 may be fastened to the motor circuit board 68, and is electrically connected to the motor circuit board 68. The magnetic gate 74 may be fastened to the housing 61. The tunnel magnetoresistance sensor 73 may be disposed opposite to the magnetic gate 74. For example, the tunnel magnetoresistance sensor 73 may be fastened to the second portion 682 of the motor circuit board 68. The magnetic gate 74 may be fastened to the second plate 614 of the housing 61. In another implementation, positions of the tunnel magnetoresistance sensor 73 and the magnetic gate 74 may be exchanged.

In this implementation, the tunnel magnetoresistance sensor 73 is configured to detect magnetic field strength of the magnetic gate 74 at different positions. When the housing 61 moves in the Z-axis direction relative to the fastening base 62, the housing 61 may drive the magnetic gate 74 to move in the Z-axis direction relative to the fastening base 62. The tunnel magnetoresistance sensor 73 may detect magnetic field strength at a position of the magnetic gate 74. In this way, when the tunnel magnetoresistance sensor 73 detects the magnetic field strength of the magnetic gate 74, displacement of the housing 61 may be determined based on the magnetic field strength. It may be understood that the tunnel magnetoresistance sensor 73 cooperates with the magnetic gate 74, to accurately control displacement of the housing 61 moving relative to the fastening base 62 in the Z-axis direction. This implements a closed-loop design of the lens assembly 60a.

In addition, compared with a solution in which a Hall effect sensor and a magnet are used, a solution in which the tunnel magnetoresistance sensor 73 cooperates with the magnetic gate 74 is used in this implementation, the housing 61 with large displacement can be accurately measured.

In an implementation, the lens assembly 60a may include a driver chip (also referred to as a driver IC). The driver IC is electrically connected to the first coil 64a and the second coil 64b. The driver chip may transmit a current to the first coil 64a and the second coil 64b. The driver chip may be located in a region surrounded by the first coil 64a, or located in a region surrounded by the second coil 64b.

In an implementation, the tunnel magnetoresistance sensor 73 may be integrated into an IC chip. In this case, the IC chip has a function of the tunnel magnetoresistance sensor 73, that is, the IC chip may be configured to detect magnetic field strength of the magnetic gate 74 at different positions.

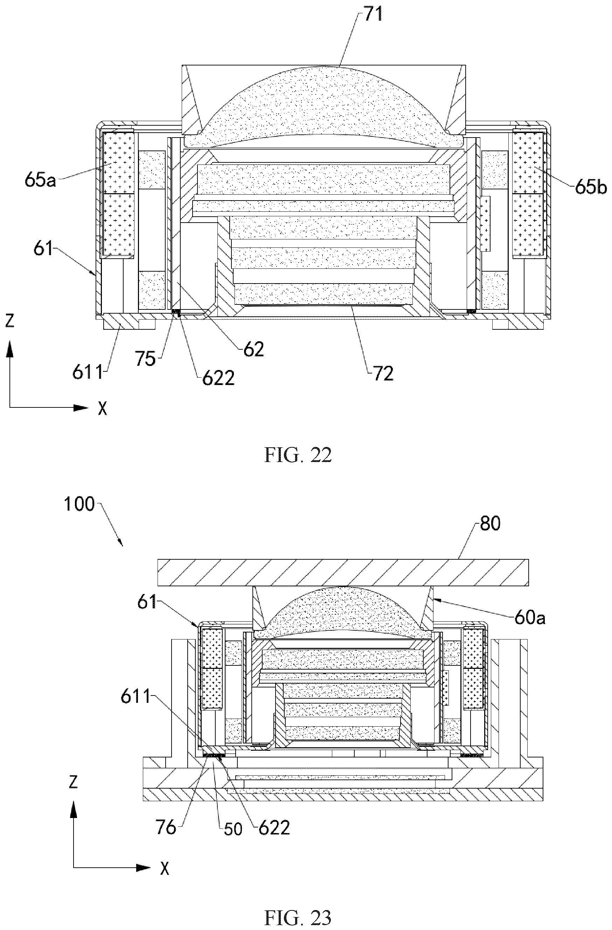

FIG. 22 is a partial cross-sectional view of the lens assembly 60a shown in FIG. 4 in another implementation. In an implementation, a first buffer member 75 is disposed on the fastening base 62. The first buffer member 75 is fastened to the bottom surface 622 of the fastening base 62. In this way, when the camera module 100 moves from the focusing state to the ejected state, the housing 61 may drive the first magnet 65a, the second magnet 65b, and the second lens 72 to move in a positive direction of the Z axis. In this case, the first buffer member 75 may buffer a collision force between the bottom plate 611 of the housing 61 and the fastening base 62, to avoid collision of the bottom plate 611 of the housing 61 or the fastening base 62. In another implementation, the first buffer member 75 may also be fastened to a top surface of the bottom plate 611 connected to the housing 61.

For example, the first buffer member 75 may be rubber, a spring, a spring plate, silicone, or another elastic component. The first buffer member 75 in this implementation is rubber.

FIG. 23 is a partial cross-sectional view of the camera module 100 shown in FIG. 2 in another implementation. In an implementation, the camera module 100 includes a second buffer member 76. The second buffer member 76 is fastened to the bottom surface 622 of the bottom plate 611 of the housing 61. In this way, when the camera module 100 switches from the ejected state to a non-ejected state, the camera decorative member 80 may drive the lens assembly 60a to move in a negative direction of the Z axis. In this case, the second buffer member 76 may buffer a collision force between the bottom plate 611 of the housing 61 and the base 50, to avoid collision of the bottom plate 611 of the housing 61 or the base 50.

For example, the second buffer member 76 may be rubber, a spring, a spring plate, silicone, or another elastic component.

The foregoing specifically describes embodiments of the electronic device 1 with reference to related accompanying drawings. The following further describes a structure of the electronic device 1 with reference to related accompanying drawings. Technical content that is the same as that in the foregoing embodiment is not described again.

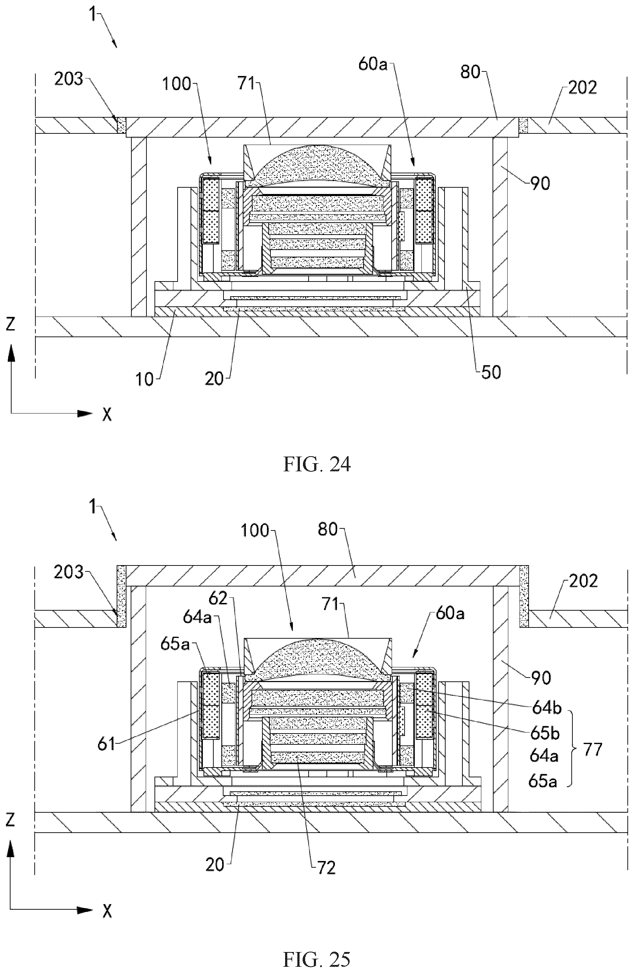

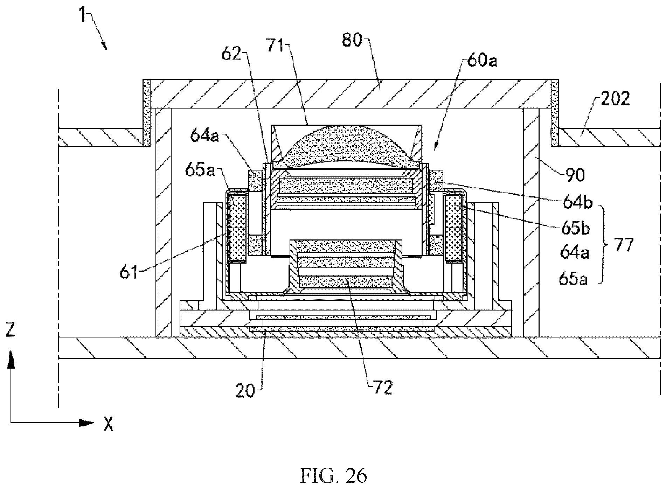

FIG. 24 is a cross-sectional view of an electronic device 1 according to another embodiment of this application. FIG. 25 is a cross-sectional view of the electronic device 1 shown in FIG. 24 in an ejected state. FIG. 26 is a cross-sectional view of the electronic device 1 shown in FIG. 24 in a focusing state. In this implementation, the first lens 71 of the lens assembly 60a and the camera decorative member 80 are separately disposed. In other words, the first lens 71 of the lens assembly 60a is no longer fastened to the camera decorative member 80. The electronic device 1 in this implementation also has three states, and the camera module 100 also correspondingly has three states. In other words, the camera module 100 has the non-ejected state, the ejected state, and the focusing state.

Refer to FIG. 24 again. When the electronic device 1 is in the non-ejected state (that is, the camera module 100 is in the non-ejected state), a distance between the camera module 100 and the camera decorative member 80 in the Z-axis direction is a first distance. Refer to FIG. 25 again. When the electronic device 1 is in the ejected state (that is, the camera module 100 is in the ejected state), a distance between the camera module 100 and the camera decorative member 80 in the Z-axis direction is a second distance. The second distance is greater than the first distance. It may be understood that in this implementation, a state of the camera module 100 (namely, the ejected state of the camera module 100) is additionally added, so that in a working process of the camera module 100, there is large focus adjustment space in the Z-axis direction. Specific descriptions are provided in the following text with reference to related accompanying drawings.

Refer to FIG. 24 and FIG. 25 again. When the electronic device 1 switches from the non-ejected state to the ejected state, the driving apparatus 90 drives the camera decorative member 80 to move relative to the rear cover 202 in the positive direction of the Z axis, and at least a part of the camera decorative member 80 may move to the outside of the mounting hole 203. In this case, a distance between the camera decorative member 80 and the camera module 100 increases. When the electronic device 1 switches from the ejected state to the non-ejected state, the driving apparatus 90 drives the camera decorative member 80 to move relative to the rear cover 202 in a negative direction of the Z axis, and at least a part of the camera decorative member 80 may move to an inner side of the mounting hole 203. In this case, the distance between the camera decorative member 80 and the camera module 100 decreases.

Refer to FIG. 26 again. When the electronic device 1 is in the focusing state, the second lens 72 is disposed away from the first lens 71. In other words, a distance between the first lens 71 and the second lens 72 corresponding to the focusing state of the electronic device 1 is greater than a distance between the first lens 71 and the second lens 72 corresponding to the ejected state of the electronic device 1.

It may be understood that, when the electronic device 1 is in the ejected state, if the camera module 100 can perform photographing normally, the camera module 100 does not need to focus. In this case, the ejected state of the electronic device 1 may also be the focusing state of the electronic device 1.

It may be understood that, when the electronic device 1 switches from the ejected state to the focusing state, the fastening base 62 slides in a positive direction of the Z axis under driving of the first magnet 65a and the first coil 64a and driving of the second magnet 65b and the second coil 64b. In this case, the fastening base 62 may drive the first coil 64a, the second coil 64b, and the first lens 71 to move in the positive direction of the Z axis. A distance between the first lens 71 and the second lens 72 increases, and the first lens 71 is away from the photosensitive chip 20. When the electronic device 1 switches from the focusing state to the ejected state, the fastening base 62 slides in a negative direction of the Z axis under driving of the first magnet 65a and the first coil 64a and driving of the second magnet 65b and the second coil 64b. In this case, the fastening base 62 may drive the first coil 64a, the second coil 64b, and the first lens 71 to move in the negative direction of the Z axis. The distance between the first lens 71 and the second lens 72 decreases, and the first lens 71 moves close to the photosensitive chip 20.

In this implementation, the fastening base 62 slides relative to the housing 61, so that the distance between the first lens 71 and the second lens 72 increases or decreases, to implement focusing of the camera module 100. The camera module 100 in this implementation has a long focusing stroke. For example, a maximum focusing distance of the camera module 100 may be 5 millimeters. In other words, the focusing stroke of the camera module 100 is within a range of 0 millimeters to 5 millimeters.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lens assembly (60a), comprising a housing (61), a fastening base (62), a first lens (71), a second lens (72), and a driving mechanism (77), wherein
the fastening base (62) is slidably connected to the housing (61) and is located inside the housing (61);
the first lens (71) is fastened to the fastening base (62), the second lens (72) is fastened to the housing (61), and the second lens (72) is located on an image side of the first lens (71); and
the driving mechanism (77) is configured to enable the housing (61) to slide relative to the fastening base (62), and a distance between the second lens (72) and the first lens (71) in an optical axis direction of the lens assembly (60a) increases or decreases.

2. The lens assembly (60a) according to claim 1, wherein the driving mechanism (77) is configured to drive the housing (61) to slide in the optical axis direction of the lens assembly (60a).

3. The lens assembly (60a) according to claim 1 or 2, wherein the driving mechanism (77) comprises a magnet (65) and a coil (64), one of the magnet (65) and the coil (64) is fastened to the housing (61), the other is fastened to the fastening base (62), and the magnet (65) and the coil (64) are disposed opposite to each other.

4. The lens assembly (60a) according to any one of claims 1 to 3, wherein the lens assembly (60a) comprises a guide rod (63), one of the housing (61) and the fastening base (62) is fastened to the guide rod (63), and the other is slidably connected to the guide rod (63).

5. The lens assembly (60a) according to claim 4, wherein the housing (61) is provided with a first groove (6135) and a second groove (6136) that are spaced apart, and the fastening base (62) is provided with a third groove (6272) and a fourth groove (6273) that are spaced apart; and
the guide rod (63) comprises a first guide rod (63a) and a second guide rod (63b), the first guide rod (63a) is slidably connected to a groove wall of the first groove (6135), the first guide rod (63a) is fastened to a groove wall of the third groove (6272), the second guide rod (63b) is slidably connected to a groove wall of the second groove (6136), and the second guide rod (63b) is fastened to a groove wall of the fourth groove (6273).

6. The lens assembly (60a) according to claim 5, wherein the groove wall of the first groove (6135) is of a "V" shape, and the groove wall of the second groove (6136) is of an arc shape, a "[" shape, or a U shape; or the groove wall of the first groove (6135) is of an arc shape, a "[" shape, or a U shape, and the second groove is of a "V" shape.

7. The lens assembly (60a) according to any one of claims 4 to 6, wherein the lens assembly (60a) comprises a first magnetic attachment member (66) and a second magnetic attachment member (67), the first magnetic attachment member (66) is fastened to the housing (61), and the second magnetic attachment member (67) is fastened to the fastening base (62); and
the guide rod (63) maintains contact with the housing (61) and the fastening base (62) under force of attachment of the first magnetic attachment member (66) and the second magnetic attachment member (67).

8. The lens assembly (60a) according to claim 7, wherein the guide rod (63) comprises the first guide rod (63a) and the second guide rod (63b) that are spaced apart, and the first guide rod (63a) and the second guide rod (63b) are located on a same side of the fastening base (62); and
the second magnetic attachment member (67) is located between the first guide rod (63a) and the second guide rod (63b), or is located on a side that is of the first guide rod (63a) and that is away from the second guide rod (63b), or is located on a side that is of the second guide rod (63b) and that is away from the first guide rod (63a).

9. The lens assembly (60a) according to any one of claims 1 to 8, wherein the lens assembly (60a) comprises a tunnel magnetoresistance sensor (73) and a magnetic gate (74), one of the tunnel magnetoresistance sensor (73) and the magnetic gate (74) is fastened to the housing (61), the other is fastened to the fastening base (62), and the tunnel magnetoresistance sensor (73) is configured to detect magnetic field strength of the magnetic gate (74) at different positions.

10. The lens assembly (60a) according to any one of claims 1 to 9, wherein the lens assembly (60a) comprises a first buffer member (75), and the first buffer member (75) is fastened to a bottom surface (622) of the fastening base (62).

11. A camera module (100), comprising a module circuit board (10), a photosensitive chip (20), and the lens assembly (60a) according to any one of claims 1 to 10, wherein
the photosensitive chip (20) is fastened to the module circuit board (10), and is electrically connected to the module circuit board (10), the housing (61) of the lens assembly (60a) is connected to the module circuit board (10), and the second lens (72) is located on an object side of the photosensitive chip (20).

12. The camera module (100) according to claim 11, wherein the camera module (100) comprises a base (50), the base (50) is fastened to the module circuit board (10), and the housing (61) of the lens assembly (60a) is slidably connected to the base (50); and
the lens assembly (60a) comprises a second buffer member (76), and the second buffer member (76) is fastened to a bottom of the housing (61).

13. An electronic device (1), comprising a casing (200) and a camera module (100), wherein the module circuit board (10) comprises a module circuit board (10), a photosensitive chip (20), and a lens assembly (60a), the module circuit board (10) is connected to the casing (200), and the photosensitive chip (20) is fastened to the module circuit board (10) and is electrically connected to the module circuit board (10);
the lens assembly (60a) comprises a housing (61), a fastening base (62), a first lens (71), a second lens (72), and a driving mechanism (77), wherein the housing (61) is connected to the module circuit board (10);
the fastening base (62) is slidably connected to the housing (61) and is located inside the housing (61);
the first lens (71) is fastened to the fastening base (62), the second lens (72) is fastened to the housing (61), and the second lens (72) is located on an image side of the first lens (71) and located on an object side of the photosensitive chip (20); and
the driving mechanism (77) is configured to enable the housing (61) to slide relative to the fastening base (62), and a distance between the second lens (72) and the first lens (71) in an optical axis direction of the lens assembly (60a) increases or decreases.

14. The electronic device (1) according to claim 13, wherein the casing (200) comprises a rear cover (202);
the electronic device (1) comprises a camera decorative member (80) and a driving apparatus (90), the camera decorative member (80) is slidably connected to the rear cover (202), and the first lens (71) is fastened to the camera decorative member (80); and
the driving apparatus (90) is configured to drive the camera decorative member (80) to drive the lens assembly (60a) to move in an optical axis direction of the camera module (100).

15. The electronic device (1) according to claim 13, wherein the casing (200) comprises a rear cover (202); the electronic device (1) comprises a camera decorative member (80), and the camera decorative member (80) is fastened to the rear cover (202); and the first lens (71) is fastened to the camera decorative member (80).

16. The electronic device (1) according to any one of claims 13 to 15, wherein the driving mechanism (77) is configured to drive the housing (61) to slide in the optical axis direction of the lens assembly (60a).

17. The electronic device (1) according to any one of claims 13 to 15, wherein the driving mechanism (77) comprises a magnet (65) and a coil (64), one of the magnet (65) and the coil (64) is fastened to the housing (61), the other is fastened to the fastening base (62), and the magnet (65) and the coil (64) are disposed opposite to each other.

18. The electronic device (1) according to any one of claims 13 to 15, wherein the lens assembly (60a) comprises a guide rod (63), one of the housing (61) and the fastening base (62) is fastened to the guide rod (63), and the other is slidably connected to the guide rod (63).

19. The electronic device (1) according to any one of claims 13 to 15, wherein the lens assembly (60a) comprises a first magnetic attachment member (66) and a second magnetic attachment member (67), the first magnetic attachment member (66) is fastened to the housing (61), and the second magnetic attachment member (67) is fastened to the fastening base (62); and
the guide rod (63) maintains contact with the housing (61) and the fastening base (62) under force of attachment of the first magnetic attachment member (66) and the second magnetic attachment member (67).

20. The electronic device (1) according to any one of claims 13 to 15, wherein the lens assembly (60a) comprises a tunnel magnetoresistance sensor (73) and a magnetic gate (74), one of the tunnel magnetoresistance sensor (73) and the magnetic gate (74) is fastened to the housing (61), the other is fastened to the fastening base (62), and the tunnel magnetoresistance sensor (73) is configured to detect magnetic field strength of the magnetic gate (74) at different positions.
